# EUROPEAN PATENT APPLICATION

(11) **EP 2 116 843 A1**
(43) Date of publication of application: **11.11.2009**
(21) Application number: 09158948.1
(22) Date of filing: 28.04.2009
(51) Int. Cl.: G01N 25/22, G01N 27/16, G01N 15/06, F01N 11/00

(54) **Particulate sensor element and fault detection apparatus**

(30) Priority: 09.05.2008 JP 2008123718
(71) Applicant: NIPPON SOKEN INC., Nishio-city Aichi 445-0012 (JP); DENSO CORPORATION, Kariya City Aichi 448-8661 (JP)
(72) Inventor: Mizutani, Keisuke, Nishio-city Aichi 445-0012 (JP); Takenami, Susumu, Nishio-city Aichi 445-0012 (JP); Makino, Daisuke, Nishio-city Aichi 445-0012 (JP); Suzawa, Takumi, Nishio-city Aichi 445-0012 (JP); Ohyama, Naohisa, Nishio-city Aichi 445-0012 (JP)
(74) Representative: TBK-Patent

(57) **Abstract**

A particulate sensor element 1 for detecting PM amount in an exhaust gas has a base material 11 made of ceramics, primary and secondary cells 12, 13, a heater 14, a differential thermal detection means 15 which are formed in the base material 11. The cells 12, 13 capture PM contained in the exhaust gas. The heater 14 generates heat to burn PM captured in the cells 12, 13. A differential heat of combustion when the captured PM is burned is obtained from a detection result of the detection means 15. The primary cell 12 supports a PM combustion catalyst 16 consists of a mixture of zeolite and alkali metal element and/or alkali earth metal element, or consists of sodalite, which are fired at a temperature of not less than 600°C. The secondary cell 13 supports no PM combustion catalyst. A fault detection apparatus has the particulate sensor element 1.

## Description

### BACKGROUND OF THE INVENTION

### 1. Field of the invention

The present invention relates to a particulate sensor element and a fault detection apparatus equipped with the particulate sensor element, and in more detail, to a particulate sensor element for use of detecting an amount of particulate matter as harmful substances contained in an exhaust gas emitted from an internal combustion engine.

### 2. Description of the Related Art

Particulate matter (carbon PM) such as soot as a harmful substance is contained in an exhaust gas emitted from internal combustion engines such as diesel engines. Such a PM is burned in and removed by a diesel particulate filter (DPF) which supports a catalyst capable of promoting PM combustion. When PM is accumulated in the DPF or the catalyst is deteriorated, the DPF does not completely burn PM contained in an exhaust gas. As a result, the exhaust gas containing residual (not burned and removed) PM is exhausted to the downstream side of the DPF.

In order to solve the above problem, for example, Japanese patent laid open publication No. JP 2006-322380 has disclosed a conventional exhaust gas purifying apparatus capable of detecting an amount of PM contained in an exhaust gas based on a differential thermal analysis, namely, based on a difference between a temperature of oxidation catalyst reaction of the exhaust gas before flowing into the DPF (at the upstream side of the DPF) and a temperature of oxidation catalyst reaction of the exhaust gas after passed through the DPF (at the downstream side of the DPF). The conventional exhaust gas purifying apparatus detects the deterioration of the catalyst supported in the DPF and controls a regeneration cycle for the DPF based on the differential thermal analysis, namely, the detected temperature difference and the amount of PM remaining in the exhaust gas after passing through the DPF.

However, the conventional DPF makes it difficult to precisely detect the above temperature difference, based on the differential thermal analysis, between the exhaust gas before flowing into the DPF and after passing through the DPF. That is, such a conventional DPF is equipped with particulate sensors at the upstream side and the downstream side of the DPF.

The ambient temperature at the upstream side and the ambient temperature at the downstream side of the DPF are drastically changed. Further, the ambient temperature at the downstream side of the DPF is affected by the heat of reaction of CO, HC, and PM and the catalyst supported in the DPF. Therefore it is difficult to precisely detect the temperature increased by oxidation catalyst reaction of the exhaust gas at the upstream side and at the downstream side of the DPF. under the same condition. It is therefore impossible to precisely detect the temperature difference, based on the differential thermal analysis, between the upstream side and the downstream side of the DPF, and accordingly impossible to precisely detect the amount of PM contained in the exhaust gas based on the above temperature difference caused by oxidation catalyst reaction of the exhaust gas.

### SUMMARY OF THE INVENTION

It is an object of the present invention to provide a particulate sensor element capable of precisely detecting an amount of particulate matter (PM), and to provide a fault detection apparatus equipped with the particulate sensor element.

To achieve the above purposes, the present invention provides a particulate sensor element 1 for use to detect an amount of particulate matter contained in an exhaust gas emitted from an internal combustion engine 7. The particulate sensor element 1 has a base material 11 made of ceramics, a primary cell 12 and a secondary cell 13, a heater 14, and differential thermal detection means 15. The primary and secondary cells 12, 13 are formed in the base material 11. The cells 12, 13 are capable of capturing particulate matter (PM) contained in an exhaust gas. The heater 14 generates heat to burn the particulate matter captured in the primary cell 12 and the secondary cell 13. The differential thermal detection means 15 detects the temperature when the particulate matter captured in the primary cell 12 and the secondary cell 13 is burned. In the particulate sensor element 1, the primary cell 12 supports a particulate combustion catalyst 16 therein. The particulate combustion catalyst 16 consists of a mixture of zeolite and alkali metal element source and/or alkali earth metal element source, or consists of a sodalite, which are fired at a temperature of not less than 600°C. The secondary cell 13 supports no particulate combustion catalyst.

The particulate sensor element 1 has the primary cell 12, the secondary cell 13, and the heater 14 that generates heat in order to burn the particulate matter captured in those cells 12, 13. It is thereby possible to detect the amount of particulate matter contained in an exhaust gas by using an analyzer such as a differential thermal analyzer based on the detection results of the differential heat of combustion obtained by the particulate sensor element 1. The differential thermal analyzer is disposed at the outside of the particulate sensor element 1. Because the primary cell 12 and the secondary cells 13 in the particulate sensor element 1 are placed under the same atmosphere, it is possible to suppress the influence of the outside atmosphere and to allow it to precisely detect the differential heat of combustion between the primary cell 12 and the secondary cell 13. As a result, it is thereby possible to precisely detect the amount of particulate matter (PM) contained in the exhaust gas.

Further, the primary cell 12 supports the particulate combustion catalyst 16 therein. The particulate combustion catalyst 16 consists of a mixture of zeolite and alkali metal element source and/or alkali earth metal element source, or consists only of a sodalite, which are fired at a temperature of not less than 600°C.

The particulate combustion catalyst 16 can promote the combustion of the particulate matter at a low temperature when compared with a temperature of the combustion of particulate matter by a conventional particulate combustion catalyst.

On the other hand, the secondary cell 13 does not support any particulate combustion catalyst. Therefore, the particulate matter captured in the primary cell 12 is firstly and preferentially burned, and the particulate matter captured in the secondary cell 13 is then burned. The difference in combustion reaction of particulate matter between the primary cell 12 and the secondary cell 13 can be clearly noticed. It is therefore possible to precisely detect the differential heat of particulate matter combustion between the primary cell 12 and the secondary cell 13.

Still further, the particulate combustion catalyst 16 supported in the primary cell 12 has a superior water resistance. For example, when the exhaust gas emitted from an internal combustion engine contains water component or moisture, and even if the water component enters in the primary cell 12, it is possible to stably detect the amount of particulate matter contained in the exhaust gas for a long period of time.

As described above, the present invention provides the particulate sensor element 1 for use to precisely detect the amount of particulate matter contained in an exhaust gas.

In accordance with another aspect of the present invention, there is provided a fault detection apparatus 2 capable of detecting faults of an exhaust gas purifying filter. The fault detection apparatus 2 has an exhaust gas purifying filter 3, a particulate sensor 100, a sensor control means 4, and a fault judgment means 5. The exhaust gas purifying filter 3 removes particulate matter contained in an exhaust gas emitted from an internal combustion engine 7 in order to purify the exhaust gas. The particulate sensor 100 has the particulate sensor element 1 and a calculation means 6. The particulate sensor element 1 detects the particulate matter contained in the exhaust gas passed through the exhaust gas purifying filter 3. The calculation means 6 calculates an amount of the particulate matter based on a differential heat of combustion obtained from the particulate sensor element 1. The sensor control means 4 controls the operation of the particulate sensor 1. The fault judgment means 5 detects a fault of the exhaust gas purifying filter 3 based on the amount of particulate matter detected by the particulate sensor 1.

The fault detection apparatus 2 according to the present invention has the exhaust gas purifying filter 3, the particulate sensor 100, the sensor control means 4, and the fault judgment means 5. In particular, the particulate sensor 100 has the particulate sensor element 1 and the calculation means 6. As previously described, the use of the particulate sensor element 1 can precisely detect a differential heat of combustion between the primary cell 12 and the secondary cell 13. The fault detection apparatus 2 can thereby detect the amount of particulate matter (PM) contained in an exhaust gas. As a result, it is possible to correctly detect the occurrence of a fault of the exhaust gas purifying filter 3.

According to the present invention, the fault detection apparatus 2 can calculate a regeneration period for the exhaust gas purifying filter 3 and also calculate an regeneration amount of the particulate combustion catalyst supported in the exhaust gas purifying filter 2. Still further, it is possible for the fault detection apparatus 2 to detect breakage of the exhaust gas purifying filter 3 and deterioration of the catalyst in the exhaust gas purifying filter 3, and to give warning (regarding such a breakage and deterioration) to users such as a vehicle driver.

A description will now be given of preferred embodiments according to the present invention.

The particulate sensor element 1 has the base material made of ceramics. It is possible to select various types of ceramics which are stable at a high temperature as a raw material. It is preferable to select the ceramics with heat resistance of not less than 1200°C, namely, at least 1200°C. It is also possible to select ceramics with anti-corrosion properties which are not corroded even if the particulate sensor element 1 is exposed in an exhaust gas for a long period of time. Specifically, it is preferable to use ceramics made of alumina, zirconia, silicon carbide, silicon nitride, cordierite, and/or additive.

According to the present invention, the particulate sensor element 1 has the heater 14. The heater 14 is comprised of a heating part and a lead part. The heating part is made of conductive metal such as Pt, Pd. The lead part is formed on the base material 11.

Further, the particulate sensor element 1 has the differential thermal detection means 15 to detect a combustion temperature when particulate matter captured in the primary cell 12 and the secondary cell 13 is burned.

The differential thermal detection means 15 is formed using a thermoelectric couple of a thin film or a thin film resistor. Specifically, it is possible to form the differential thermal detection means 15 using noble metal such as Pt (platinum), Re (rhenium), Ag (silver), Au (gold) or an alloy containing at least noble metal. The differential thermal detection means 15 can detect the temperature (heat of combustion) of each of the primary cell 12 and the secondary cell 13 when particulate matter is burned. Based on the detection result of the differential thermal detection means 15, it is possible to calculate the difference temperature between the primary cell 12 and the secondary cell 13 when the particulate matter is burned.

As described above, the primary cell 12 in the particulate sensor element 1 supports the particulate combustion catalyst 16 that is produced by firing a mixture at a temperature of not less than 600°C, where the mixture is made of zeolite and alkali metal element source and/or alkali earth metal element source. The secondary cell 13 in the particulate sensor element 1 supports no catalyst.

It is possible for the secondary cell 13 to support a catalyst such as Pt catalyst other than the particulate combustion catalyst 16.

It is preferable that the secondary cell 13 does not support any catalyst capable of promoting the combustion of particulate matter. This can clearly show the difference of the combustion-starting temperature when the particulate matter is burned in the primary cell 12 and the secondary cell 13. In this case, the combustion of particulate matter captured in the primary cell 12 is preferentially started rather than in the secondary cell 13. It is possible to detect the heat energy of the combustion of particulate matter in the primary cell 12. After the combustion of the particulate matter captured in the primary cell 12, the particulate matter captured in the secondary cell 13 reaches its spontaneous combustion temperature and is then burned. It is possible to detect the heat energy of the combustion of the particulate matter in the secondary cell 13. Thus, it is possible to precisely detect the temperature of the primary cell 12 and the secondary cell 13 when the particulate matter is burned and to calculate the temperature difference between the primary cell 12 and the secondary cell 13. As a result, the differential thermal detection means 15 can detect the amount of particulate matter based on the calculated temperature difference.

Although the particulate sensor element 1 has the two cells, the primary cell 12 and the secondary cell 13, the present invention is not limited by this structure. It is possible for particulate sensor element 1 to have three cells or more. In the structure having not less than three cells, it is possible to use two cells or more for the primary cell 12 in which the particulate combustion catalyst 16 is supported, or possible to use two cells or more for the secondary cell 13 in which no particulate combustion catalyst is supported.

The particulate combustion catalyst 16 is produced by firing a mixture or sodalite at a temperature of not less than 600°C, where the mixture is made of zeolite and alkali metal element source and/or alkali earth metal element source. Thus, it is possible to use sodalite as zeolite.

That is, the particulate combustion catalyst 16 is produced by firing the mixture of zeolite (also including sodalite) and alkali metal element source and/or alkali earth metal element source at a temperature of not less than 600°C. Still further, it is also possible to produce the particulate combustion catalyst 16 by firing sodalite only at a temperature of not less than 600°C. The particulate combustion catalyst 16 can be made by firing sodalite only at a temperature of not less than 600°C.

In general, zeolite other than sodalite is represented by a general expression of M_{2/n}O • Al₂O₃ • ySiO₂ • zH₂O (where M is at least one element of Na, K, and H, y≧2, and z≧0). The present invention can use the zeolite represented by the above general expression. For example, it is possible to use zeolite of a structure of LTA type, FAU (faujasite) type, MOR type, LTL type, FER type, MFI type, and BEA type and others.

Sodalite is represented by a general expression of 3(Na₂O • Al₂O₃ • 2SiO₂) • 2NaX, where X is an atom or an atom group of monovalent negative ion, for example, OH or halogen of F, CI, Br, and I.

In the particulate sensor element 1 as another aspect of the present invention, it is preferable that the zeolite has a chemical composition to provide less than 200 mol. of an amount of SiO₂ per 1 mol. of Al₂O₃. That is, it is preferable to use zeolite containing less than 200 mol. of SiO₂ per 1 mol. of Al₂O₃, in other words, to use zeolite having the relationship of y< 200 in the general expression of M_{2/n}O • Al₂O₃ • ySiO₂ • zH₂O. On the other hand, zeolite containing not less than 200 mol. of SiO₂ per 1 mol. of Al₂O₃, that is, zeolite having the relationship of y≧ 200 in the general expression of M_{2/n}O • Al₂O₃ • ySiO₂ • zH₂O is in general referred to as "HI-Silica zeolite". The use of "HI-Silica zeolite" to make the particulate combustion catalyst 16 would cause a possibility of decreasing its particulate matter combustion promoting function.

In the particulate sensor element 1 as another aspect of the present invention, it is preferable to use sodalite as zeolite. When sodalite is used as zeolite in the mixture, Na in sodalite and alkali metal element in alkali metal element source and/or alkali earth metal element in alkali earth metal element source can provide the superior particulate combustion promoting function. The particulate sensor element 1 can precisely detect the differential heat of combustion in each of the primary cell 12 and the secondary cell 13. It is thereby possible to correctly detect an amount of particulate matter contained in an exhaust gas.

In the particulate sensor element 1 as another aspect of the present invention, it is preferable that the mixture contains a total amount of not more than 2.25 mol. of alkali metal element in alkali metal element source and/or alkali earth metal element in alkali earth metal element source per 1 mol. of Si element in the sodalite.

When the total amount of alkali metal element and alkali earth metal element exceeds 2.25 mol. per 1 mol. of Si element in sodalite, there is a possibility that the particulate combustion catalyst 16 tends to be easily dissolved into water or moisture even though it has a superior catalyst-activation capability. That is, there is a possibility of largely decreasing its catalyst-activation capability by water or moisture. This makes it difficult to maintain the catalyst-activation capability of the particulate combustion catalyst 16 for a long period of time. This would adversely affect the lifetime of the particulate sensor element 1.

In the particulate sensor element 1 as another aspect of the present invention, it is more preferable that the mixture contains not more than 1 mol. of a total amount of alkali metal element in alkali metal element source and/or alkali earth metal element in alkali earth metal element source per 1 mol. of Si element in the sodalite. It is most preferable that the mixture contains not more than 0.5 mol. of the total amount of alkali metal element in alkali metal element source and/or alkali earth metal element in alkali earth metal element source per 1 mol. of Si element in the sodalite.

In the particulate sensor element 1 as another aspect of the present invention, it is preferable that when zeolite other than sodalite is used in the mixture, the mixture contains within a range of not less than 0.1 mol. to not more than 2.0 mol. of a total amount of alkali metal element in alkali metal element source and/or alkali earth metal element in alkali earth metal element source per 1 mol. of Si element in the zeolite.

When the total amount of alkali metal element and alkali earth metal element per Si element of 1 mol. in zeolite is less than 0.1 mol., there is a possibility of decreasing the water resistance capability of the particulate combustion catalyst 16.

On the other hand, when the total amount of alkali metal element and alkali earth metal element per Si element of 1 mol. in zeolite is more than 2.0 mol., there is a possibility of easily and drastically decreasing the particulate combustion promoting function under wet conditions (or in the presence of water).

It is more preferable that the mixture contains within a range of not less than 0.2 mol. to not more than 1.5 mol of the total amount of alkali metal element in alkali metal element source and alkali earth metal element in alkali earth metal element source per 1 mol. of Si element in alumino-silicate.

The total amount of alkali metal element and alkali earth metal element per Si element is the sum of the alkali metal element in alkali metal element source and alkali earth metal element in alkali earth metal element source mixed in zeolite. When one of alkali metal element and alkali earth metal element is used, it is possible to set the other element to zero mole On the other hand, when a plurality of alkali metal elements and a plurality of alkali earth metal elements are used, the total amount of them is a sum of those elements. There is further a possibility to include a compound containing one or more alkali metal elements. Still further, there is a possibility to include a compound containing one or more alkali earth metal elements.

In the exhaust gas purifying filter 1 as another aspect of the present invention, it is preferable that the mixture contains at least alkali metal source. This structure can more increase the particulate combustion promoting function to burn particulate matters contained in an exhaust gas. It is therefore possible to precisely detect the temperature of each of the primary cell 12 and the secondary cell 13 in the particulate sensor element 1, and to precisely obtain a temperature difference between them, and as a result, possible to precisely detect an amount of particulate matter contained in an exhaust gas.

In the particulate sensor element 1 as another aspect of the present invention, it is preferable that the alkali metal is at least one selected from Na, K, Rb, and Cs, and the alkali earth metal is at least one selected from Mg, Ca, Sr, and Ba. This structure can more increase the particulate combustion promoting function to burn particulate matter. It is therefore possible to precisely detect the differential heat of combustion in each of the primary cell 12 and the secondary cell 13 in the particulate sensor element 1. As a result, the use of the particulate combustion catalyst 16 in the primary cell 12 can precisely detect an amount of particulate matter contained in an exhaust gas.

It is more preferable to use a compound containing Ca, Sr, or Ba as alkali earth metal element source when sodalite is used as zeolite. It is more preferable to use a compound containing Ba as alkali earth metal element source when zeolite other than sodalite is used.

In the particulate sensor element 1 as another aspect of the present invention, the alkali earth metal contains at least Ba. It is possible to further increase the particulate combustion promoting function to burn particulate matter when compared with using the alkali earth metal element source consisting of alkali earth metal elements other than Ba. It is therefore possible to precisely detect the differential heat of combustion in each of the primary cell 12 and the secondary cell 13 in the particulate sensor element 1. As a result, the use of the particulate combustion catalyst 16 in the primary cell 12 can precisely detect an amount of particulate matter contained in an exhaust gas.

In the particulate sensor element 1 as another aspect of the present invention, it is preferable that the mixture of zeolite and alkali metal element source and/or alkali earth metal element source are mixed in hydrophilic solvent and then dried to evaporate any water component in the solvent in order to make a bulk of the mixture. In this structure, it is possible to easily and uniformly mix zeolite and alkali metal element source and/or alkali earth metal element source. It is thereby possible to suppress the degradation of the catalyst activity function of the particulate combustion catalyst 16 by worse catalyst activity caused by uniform distribution thereof. For example, it is possible to use alcohol such as methanol and ethanol, or water, or a mixture solution of water and alcohol as the hydrophilic solvent. It is also preferable to use volatility solvent as the hydrophilic solvent. The use of volatility solvent can easily dry the mixture.

In the particulate sensor element 1 as another aspect of the present invention, it is preferable that the alkali metal element source and/or alkali earth metal element source are carbonate, sulfate, phosphate, nitrate, organic acid, halide, oxide, or hydroxide.

In this case, it is possible to easily mix the alkali metal element source and/or alkali earth metal element source into hydrophilic solvent such as water. During mixing the mixture, it is possible to mix zeolite and alkali metal element source and/or alkali earth metal element source in the hydrophilic solvent and to make the mixture with uniform dispersion.

It is more preferable to use alkali metal element as alkali metal element source and alkali earth metal element as alkali earth metal element source. In this case, because the alkali metal element and/or alkali earth metal element source can be easily dissolved into hydrophilic solvent, when zeolite and alkali metal element and/or alkali earth metal element are mixed in hydrophilic solvent such as water, it is possible to easily and uniformly mix zeolite and alkali metal element source and/or alkali earth metal element source.

According to the present invention, the particulate combustion catalyst 16 consists of the mixture or sodalite produced by firing it at a temperature of not less than 600°C.

When the firing temperature is less than 600°C during the step of firing the mixture or sodalite, the particulate combustion catalyst 16 has a low water-proof capability (or a low water resistance). This makes it difficult to maintain the particulate-amount detection capability of the particulate sensor element 1 for a long period of time. It is more preferable to fire the mixture or sodalite at a temperature of not less than 700°C, most preferable to fire it at a temperature of not less than 800°C.

In the particulate sensor element 1 as another aspect of the present invention, it is preferable to support the particulate combustion catalyst 16 in the base material 11 after the mixture or sodalite is fired at a temperature of not less than 600°C.

In this case, it is possible to pulverize the particulate combustion catalyst 16 after completion of the firing. Because the powder of the particulate combustion catalyst 16 is supported in the base material 11, it is possible to increase the surface area of the powder of the particulate combustion catalyst 16 supported in the base material 11. This can increase the catalyst activity function of the particulate combustion catalyst 16 in the particulate sensor element 1.

In the particulate sensor element 1 as another aspect of the present invention, it is preferable that the particulate combustion catalyst 16 is supported in the base material 11 after the mixture or sodalite is pulverized after the mixture or sodalite is fired.

It is preferable to pulverize the particulate combustion catalyst 16 to make a catalyst powder so that the catalyst powder has a median particle diameter (or a median grain diameter) of not more than 50 µm. If the catalyst powder has a median particle diameter of more than 50 µm, it would cause fluctuation in the amount of the catalyst powder supported in the primary cell in the particulate sensor element 11. It is preferable to pulverize the particulate combustion catalyst 16 so that the obtained catalyst powder has a median particle diameter of not more than 10 µm. The median particle diameter of the catalyst powder can be detected by using various detection apparatus such as laser diffraction/scattering type particle size detection apparatus, or scanning electron microscope.

In the particulate sensor element 1 as another aspect of the present invention, it is preferable that the mixture or sodalite is fired at a temperature of not more than 1200°C. When the mixture or sodalite is fired at a temperature of more than 1200°C, there is a possibility that the mixture or sodalite fuses. This causes a possibility of producing a hard solid of the particulate combustion catalyst 16. This makes it difficult to produce the particulate combustion catalyst 16 having a predetermined particle size or difficult to adjust the particle size of the catalyst powder to a desired particle size.

By the way, the above firing temperature is the temperature to fire the mixture or sodalite itself, not an ambient temperature. Accordingly, it must be necessary to fire the mixture or sodalite so that the temperature of the mixture itself or sodalite itself becomes not less than 600°C. Still further, during the firing, it is preferable to perform the firing for not less than one hour, more preferably not less than five hours, or most preferably not less than ten hours.

In the particulate sensor element 1 as another aspect of the present invention, it is preferable that the mixture or sodalite is fired at a temperature of not less than 600°C after the mixture or sodalite is supported in the base material 11 considering from a viewpoint that it is possible to simultaneously perform the following steps (a) and (b) by a single firing process: (a) making the particulate combustion catalyst 16 made by firing the mixture or sodalite at a temperature of not less than 600°C; and (b) supporting the particulate combustion catalyst 16 in the base material 11.

In this case, it is possible to fire the mixture or sodalite at the temperature of more than 1200 °C. When the firing is performed at a temperature of more than 1200°C, the mixture or sodalite is temporarily fused and then changed to the hard solid of the particulate combustion catalyst 16. The particulate combustion catalyst 16 has the superior water proof capability (or superior water resistance) and the superior particulate combustion promoting function to burn particulate matter at a low temperature.

According to the present invention, the fault detection apparatus 2 has the exhaust gas purifying filter 3, the particulate sensor 100, the sensor control means 4, and the fault judgment means 5.

It is preferable that the fault detection apparatus 2 has a drive diagnostic means 50, and the sensor control means 4 controls the operation of the particulate sensor 100 based on the drive diagnostic information.

It is preferable that the drive diagnostic means 50 detects the drive distance as the drive diagnosis, and the fault judgment means 5 detects the occurrence of the fault of the exhaust gas purifying filter 3 based on a change of the amount of the particulate matter per drive distance. It is thereby possible to effectively detect the occurrence of a fault in the exhaust gas purifying filter 3.

### BRIEF DESCRIPTION OF THE DRAWINGS

A preferred, non-limiting embodiment of the present invention will be described by way of example with reference to the accompanying drawings, in which:
FIG.1 is an explanatory view showing a DTA peak temperature when carbon-based material (carbon black (CB)) is burned in each of evaluation samples with various types of catalysts and without any catalyst according to the first embodiment of the present invention;
FIG. 2 is a view showing a relationship between temperature, TG, and DTA when the evaluation sample only containing CB is burned according to the first embodiment of the present invention;
FIG. 3 is a view showing a relationship between temperature, TG, and DTA when the evaluation sample containing noble metal catalyst and CB is burned according to the first embodiment of the present invention;
FIG. 4 is a view showing a relationship between temperature, TG, and DTA when the evaluation sample containing potassium carbonate catalyst (K₂CO₃) and CB is burned according to the first embodiment of the present invention;
FIG. 5 is a view showing a relationship between temperature, TG, and DTA when the evaluation sample containing carbon-based material combustion catalyst (sample E1) and CB is burned according to the first embodiment of the present invention;
FIG. 6 is an explanatory view showing a relationship between firing temperature and DTA peak top temperature of each of carbon-based material combustion catalysts as evaluation samples (in which one group was not treated by water washing and the other group was treated by water washing) according to the first embodiment of the present invention;
FIG. 7 is an explanatory view showing a relationship between potassium salt and DTA peak top temperature of each of carbon-based material combustion catalysts as evaluation samples (in which one group was not treated by water washing and the other group was treated by water washing) according to the first embodiment of the present invention;
FIG. 8 is an explanatory view showing a relationship between alkali metal elements, alkali earth metal elements and DTA peak top temperature of each of carbon-based material combustion catalysts as evaluation samples (in which one group was not treated by water washing and the other group was treated by water washing) according to the first embodiment of the present invention;
FIG. 9 is an explanatory view showing a relationship between alkali metal elements, alkali earth metal elements and DTA peak top temperature of each of carbon-based material combustion catalysts as evaluation samples (in which one group was not treated by water washing and the other group was treated by water washing) according to the first embodiment of the present invention;
FIG. 10 is an explanatory view showing a relationship between amount of potassium carbonate and DTA peak temperature of each of carbon-based material combustion catalyst as evaluation samples (in which one group was not treated by water washing and the other group was treated by water washing) according to the first embodiment of the present invention;
FIG. 11 is an explanatory view showing a relationship between amount of Ba and DTA peak temperature of each of carbon-based material combustion catalysts as evaluation samples (in which one group was not treated by water washing and the other group was treated by water washing) according to the first embodiment of the present invention;
FIG. 12 is an explanatory view showing DTA peak temperature when each of carbon-based material combustion catalysts as evaluation samples (not treated by water washing and treated by water washing) which contain carbon black (CB) only, noble metal catalyst and CB, sample E2 and CB, and potassium carbonate (K₂CO₃) and CB, respectively, is burned according to the second embodiment of the present invention;
FIG. 13 is an explanatory view showing a relationship between different firing temperature and DTA peak top temperature of carbon-based material combustion catalyst as the evaluation samples containing only sodalite (in which one group was not treated by water washing and the other group was treated by water washing) according to the second embodiment of the present invention;
FIG. 14 is an explanatory view showing a relationship between zeolite type and DTA peak top temperature of carbon-based material combustion catalyst according to the second embodiment of the present invention;
FIG. 15 is an explanatory view showing a relationship between catalyst type and DTA peak top temperature when carbon-based material (carbon black) is burned with catalysts and without any catalyst (in which one group was not treated by water washing and the other group was treated by water washing) according to the third embodiment of the present invention;
FIG. 16 is an explanatory view showing a relationship between zeolite type and DTA peak top temperature of carbon-based material combustion catalysts as evaluation samples (which are fired, and in which one group was not treated by water washing and the other group was treated by water washing) according to the fourth embodiment of the present invention;
FIG. 17 is an explanatory view showing DTA peak top temperature of a mixture of each of various types of zeolite and potassium carbonate as the catalyst (which are not fired, and in which one group was not treated by water washing and the other group was treated by water washing) according to the fourth embodiment of the present invention;
FIG. 18 is an explanatory view showing DTA peak top temperature of carbon-based material combustion catalysts at different firing temperatures (in which one group was not treated by water washing and the other group was treated by water washing) according to the fifth embodiment of the present invention;
FIG. 19 is an explanatory view showing DTA peak top temperature of carbon-based material combustion catalysts consisting of zeolite and potassium carbide of a different amount (in which one group was not treated by water washing and the other group was treated by water washing) according to the sixth embodiment of the present invention;
FIG. 20 is an explanatory view showing DTA peak top temperature of carbon-based material combustion catalysts made of zeolite and different types of alkali metal elements and alkali earth metal elements (in which one group was not treated by water washing and the other group was treated by water washing) according to the seventh embodiment of the present invention;
FIG. 21 is an explanatory view of a particulate sensor element having a primary cell and a secondary cell observed from an upper side according to the eighth embodiment of the present invention;
FIG. 22A is an explanatory sectional view (taken in line A-A in FIG.
21) of the primary cell in the particulate sensor element according to the eighth embodiment;
FIG. 22B is an explanatory sectional view (taken in line B-B in FIG. 21) of the secondary cell in the particulate sensor element according to the eighth embodiment;
FIG. 23A is an explanatory view of the primary cell and the secondary cells in the particulate sensor element according to the eighth embodiment in which CB powder is placed;
FIG. 23B is an explanatory view of the primary cell and the secondary cells in the particulate sensor element according to the eighth embodiment in which CB powder is burned at a temperature which is lower than a spontaneous combustion temperature of the CB powder;
FIG. 23C is an explanatory view of the primary cell and the secondary cells in the particulate sensor element according to the eighth embodiment in which CB powder is completely burned after the temperature of CB powder reaches the spontaneous combustion temperature of the CB powder;
FIG. 24 is an explanatory view showing a relationship between DTA and temperature when CB is burned in the particulate sensor element according to the eighth embodiment in which a particulate combustion catalyst (sample E1) is supported in the primary cell;
FIG. 25 is an explanatory view showing a relationship between DTA and temperature when CB is burned in the particulate sensor element according to the eighth embodiment in which a Pt catalyst is supported in the primary cell; and
FIG. 26 is a schematic explanatory view of an engine control system in which a fault detection apparatus is assembled according to the ninth embodiment of the present invention.

### DETAILED DESCRIPTION OF THE PREFERRED EMBODIMENTS

Hereinafter, various embodiments of the present invention will be described with reference to the accompanying drawings. In the following description of the various embodiments, like reference characters or numerals designate like or equivalent component parts throughout the several diagrams.

### First embodiment

A description will be given of the production of the particulate combustion catalyst and the evaluation of the catalyst according to the first embodiment of the present invention. The particulate combustion catalyst is applied to a particulate sensor element for use to detect an amount of particulate matter contained in an exhaust gas emitted from an internal combustion engine. The particulate sensor element will be explained later in detail.

The particulate combustion catalyst is produced by firing a mixture of zeolite and alkali metals and/or alkali earth metals at not less than 600°C, or a mixture of zeolite and sodalite at not less than 600°C.

In the first embodiment, sodalite was used as zeolite. Sodalite and alkali metal element source (group) and/or alkali earth metal element source (group) were mixed. Specifically, sodalite powder (3(Na₂O • Al₂O₃ • 2SiO₂) • 2NaOH) was firstly prepared as zeolite.

Sodalite powder of 100 pts.wt. and potassium carbonate of 5 pts.wt. were added into water to make a mixed solution.

Next, the mixed solution obtained above was heated at 120°C to evaporate the water component. This made a bulk of the mixture of sodalite and potassium carbonate.

Next, the bulk was heated at the heating rate of 100°C/hour up to 800°C (as firing temperature) and then was held at 800°C for ten hours in order to fire the bulk.

Next, the fired bulk was pulverized to make a particulate combustion catalyst powder having a median particle diameter (or a median grain diameter) of not more than 10 µm and a maximum particle size of not more than 100 µm. The catalyst powder will be referred to as "sample E1".

Next, the particulate matter combustion promoting function (PM combustion promoting function) of the particulate combustion catalyst (sample E1) and other evaluation samples were detected. The PM combustion promoting function for a noble metal catalyst (Pt powder) and a potassium carbonate powder as comparison samples were also detected.

Specifically, the catalysts (sample E1, noble metal catalyst, potassium carbonate powder) of 200 mg and carbon black (CB, carbon-based material as substitute for particulate matter (PM)) were precisely weighted by an electrical balance or a weighting machine.

Those materials were mixed for a predetermined time length by using an agate mortar to make three types of evaluation samples having the composition, Catalyst (parts by weight) : CB (parts by weight) = 10 : 1.

Further, a comparison evaluation sample having CB only without any catalyst was prepared. Like the evaluation samples, this comparison evaluation sample having CB only was prepared by mixing it for the same predetermined time length by using the agate mortar. That is, the first embodiment used the following four types of the evaluation samples: CB only, the mixture of noble metal catalyst and CB, the mixture of sample E1 and CB, and the mixture of potassium carbonate and CB.

Next, the first embodiment used an apparatus (TG8120 manufactured by RIGAKU Corporation in Japan) of simultaneously detecting thermal analysis - difference in temperature between an evaluation sample and a reference material (TG - DTA). Each of the evaluation samples of 6 mg was heated at the heating rate of 10°C/min up to 900°C in order to burn CB. The DTA peak temperature and a relationship between temperature and TG were detected. The DTA peak temperature of the evaluation sample of 0.5 mg having CB only was detected.

The heating was performed while air flowed at the flow rate of 50 mL/min through the evaluation samples.

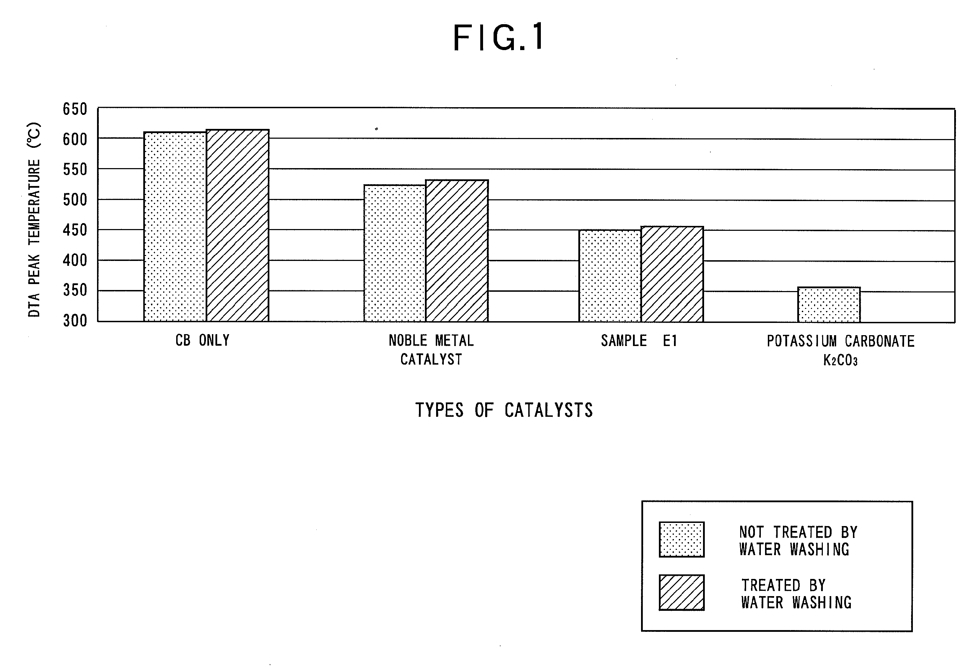

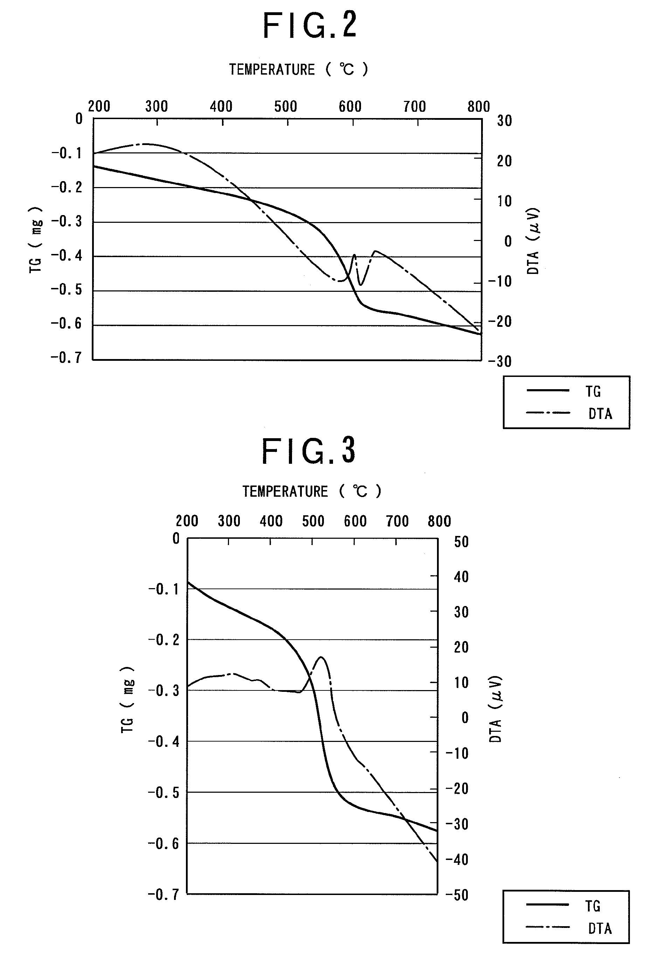

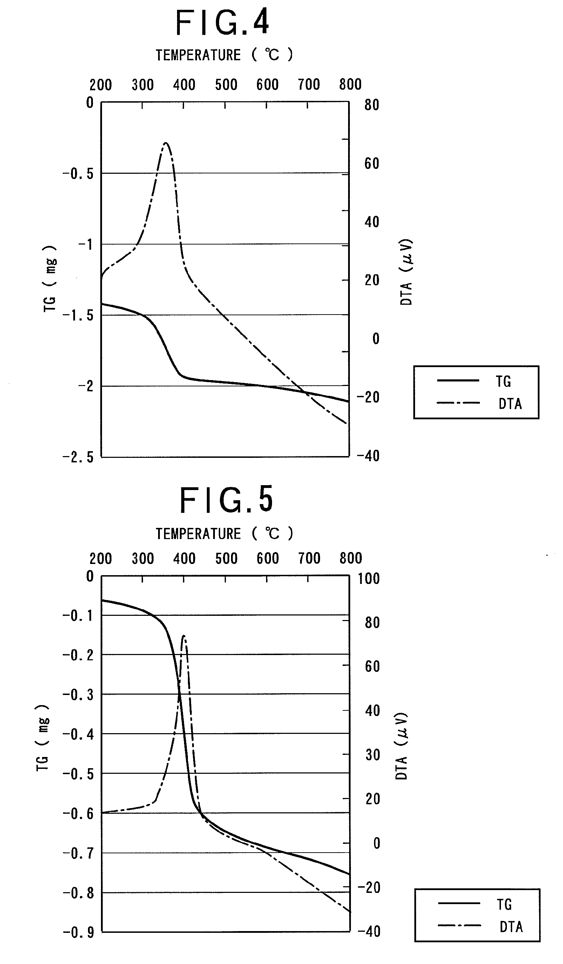

FIG. 1 is an explanatory view showing a DTA peak temperature when each of evaluation samples was burned, which contain CB only, various types of catalysts, and no catalyst, respectively. FIG. 2 is a view showing a relationship between temperature, TG, and DTA when the evaluation sample containing CB only was burned. FIG. 3 is a view showing a relationship between temperature, TG, and DTA when the evaluation sample containing noble metal catalyst and CB was burned. FIG. 4 is a view showing a relationship between temperature, TG, and DTA when the evaluation sample containing potassium carbonate catalyst (K₂CO₃) and CB was burned. FIG. 5 is a view showing a relationship between temperature, TG, and DTA when the evaluation sample containing particulate combustion catalyst (sample E1) and CB was burned.

In FIG. 2 to FIG. 5, the vertical axis designates the DTA peak temperature indicating the maximum burning speed for carbon black.

Other evaluation samples were prepared as follows. Each of the catalysts (sample E1, noble metal catalyst, and potassium carbonate) of 1 g was added into water solution of 500 cc and mixed for twenty four hours to purify the catalyst. Next, the solution including the catalyst was filtered and the catalyst was treated by water washing. That is, the catalyst was adequately washed by flowing water of 1500 cc. The catalyst was then dried at 1200°C. Each of the purified catalysts (sample E1 and noble catalysts) of 200 mg and CB of 20 mg were correctly weighted by the electric balance. The catalyst and the CB were mixed for a predetermined time length by the agate mortar in order to obtain the 10:1 mixture (parts by weight) of catalyst and CB. Thus, the two types of the evaluation samples containing the catalysts and CB were prepared, one was the mixture of sample E1 and CB, and the other was the mixture of noble metal and CB. Further, the evaluation sample containing CB only was treated by water washing and then dried. The evaluation sample containing CB only was mixed by the agate mortar, like the other evaluation samples.

Because the evaluation sample containing potassium carbonate as catalyst was dissolved into water during the water washing treatment, this evaluation sample could be evaluated. That is, the first embodiment evaluates the three types of the evaluation samples, which were treated by water washing, containing CB only, the mixture of noble metal and CB, the mixture of sample E1 and CB. The DTA peak temperature was detected for each of the three types of the evaluation samples by using the apparatus (TG8120 manufactured by RIGAKU Corporation in Japan) of simultaneously detecting thermal analysis - difference in temperature between sample and reference material (TG - DTA). FIG. 1 shows the DTA peak temperature as the evaluation results of the various evaluation samples (not treated by water washing/ treated by water washing).

As clearly understood from the evaluation results shown in FIG. 1 to FIG. 5, the evaluation samples including sample E1 and potassium carbonate, which were not treated by water washing, have a low DTA peak temperature. The evaluation results indicate that it is possible to burn PM at a low temperature in the evaluation samples which contain sample E1 and potassium carbonate. As can be understood from FIG. 1 to FIG. 5, although the sample E1 has the DTA peak temperature at approximately 400°C, it may be considered that the combustion of CB in sample E1 was actually started at a lower temperature (for example, approximately at 350°C).

As can be understood from the evaluation results shown in FIG. 1, the PM combustion promoting function of the evaluation samples only containing CB, containing noble metal catalyst, and containing the sample E1 are almost unchanged regardless of performing the water washing treatment. On the other hand, as previously described, it was impossible to detect the PM combustion promoting function of the evaluation sample containing potassium carbonate because potassium carbonate was dissolved by water.

According to the evaluation results from FIG. 1 to FIG. 5, sample E1 has the superior PM combustion promoting function. The use of sample E1 can remove particulate matter (PM) contained in an exhaust gas under a low temperature condition. Further, because the sample E1 maintains the superior function thereof in the presence of water or moisture, the use of the sample E1 can provide PM combustion for a long period of time without deterioration of the PM combustion promoting function. The sample E1 is the catalyst made by firing the mixture of sodalite of 100 pts.wt. and potassium carbonate of 5 pts.wt. at 800°C for ten hours.

Next, a description will now be given of the detection results regarding the influence of the firing temperature to the catalyst activity function of each of the evaluation samples. Each of the evaluation samples was made by firing a bulk (or a solid component as a mixture) of sodalite and potassium carbonate at a different temperature.

Specifically, at first, sodalite of 100 pts.wt. and potassium carbonate of 10 pts.wt. were added into water and mixed in order to obtain a mixed solution. The obtained mixed solution was heated at 120°C to evaporate the water component and to obtain a solid residue of the mixture. The nine evaluation mixtures were prepared.

Next, the prepared nine evaluation mixtures were heated at different temperatures such as 500°C, 600°C, 700°C, 800°C, 900°C, 1000°C, 1100°C, 1200°C, and 1300°C, respectively, in order to make the nine types of catalysts. Those nine types of catalysts were made under the same production conditions excepting the heating temperature.

On the other hand, the nine types of catalysts were made under the same production condition of sample E1 previously described except for the composition ratio of sodalite and potassium carbonate and the heating temperature.

Still further, in order to detect the influence caused by the combustion period of time, the two types of catalysts were made by firing the mixture at 600°C for ten hours, like the sample E1, and for five hours, respectively. The other evaluation samples as catalysts were made by firing the mixtures at 500°C, 700°C, 800°C, 900°C, 1000°C, 1100°C, 1200°C, and 1300°C, respectively, for ten hours, like the sample E1.

The PM combustion promoting function of the evaluation samples as the catalysts were detected by the same method of the sample E1. A mixture of sodalite and potassium carbonate was prepared as a comparison evaluation sample, and PM combustion promoting function of the comparison evaluation sample was also detected. The comparison evaluation sample was not heated, but placed at room temperature (approximately 25°C) for about ten hours, instead of the heating.

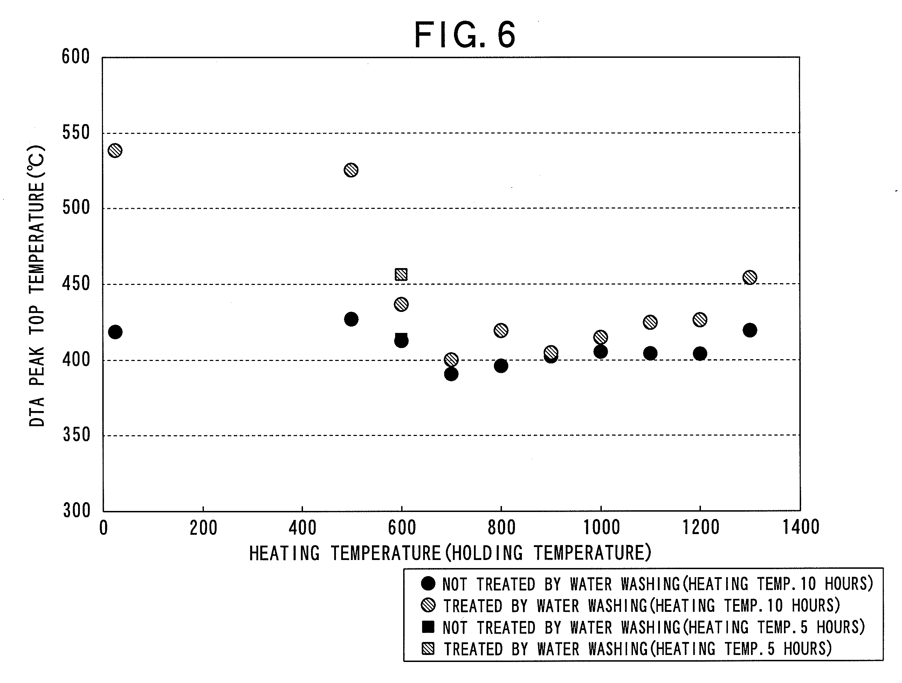

The detection of the PM combustion promoting function of the evaluation samples as the catalysts and the comparison evaluation sample was performed by detecting the DTA peak temperature, like the sample E1. FIG. 6 is an explanatory view showing a relationship between firing temperature and DTA peak top temperature of each of evaluation samples (not treated by water washing and treated by water washing).

As can be understood from the detection results shown in FIG. 6, the DTA peak top temperature of the catalyst made by heating at not less than 600°C has an extremely low value of approximately not more than 460°C regardless of performing the water washing treatment.

Because the DTA peak temperature of a noble metal (Pt) catalyst, which is commonly used as a combustion catalyst to remove PM, is approximately 520°C (see FIG. 1), the catalysts for the exhaust gas purification produced by firing at different temperatures of not less than 600°C have the adequate and superior catalyst activity function to purify an exhaust gas containing PM emitted from an internal combustion engine.

The catalysts without any treatment of water washing produced by a firing temperature of less than 600°C have an adequately low DTA peak temperature, when compared with that of the noble metal catalyst (Pt), On the other hand, the catalysts treated by water washing and produced by firing at the temperature of less than 600°C have an extremely high DTA peak temperature. This indicates that the catalyst treated by water washing and fired at less than 600°C is lower in catalyst activity function than the noble metal catalyst.

By the way, the catalysts containing the mixture of sodalite and potassium carbonate without any treatment of water washing and without any firing treatment had a superior catalyst activity function, but the catalyst activity function of the catalyst containing the mixture of sodalite and potassium carbonate treated by water washing was decreased.

It may be considered that the dissolving of potassium by water causes the catalyst activity function of the catalysts, which was produced by firing at the temperature of less than 600°C, to extremely deteriorate.

Therefore it can be understood that it is necessary to fire the catalysts at the temperature of not less than 600°C. Further, as can be understood from the detection results shown in FIG. 6, the firing for the mixture at the temperature range within 700°C to 1200°C can produce the superior catalysts for purifying an exhaust gas having a low DTA peak temperature, that is, can produce the catalysts having the superior catalyst activity function. Still further, as may be understood from FIG. 6, the long heating period of time, that is, the case of performing the ten-hour heating more suppresses the deterioration of the activity capability of the catalyst produced after the water washing treatment when compared with the case of performing the five hour heating.

In the embodiment described above, the catalyst for exhaust gas purification was produced by mixing sodalite and potassium carbonate as potassium source. The present invention is not limited by the embodiment described above. That is, it is possible to use other potassium sources.

Next, a description will now be given of a plurality of catalysts containing other potassium salt for purifying an exhaust gas and the DTA peak top temperature of each catalyst.

Specifically, the embodiment prepared a plurality of mixtures composed of sodalite and each of potassium salt (potassium carbonate, potassium nitride, potassium chloride, potassium sulfate, potassium acetate, potassium dihydrogen phosphate, and potassium hydroxide). Each mixture was made so that potassium salt in each mixture has 0.225 mol. or 0.00225 mol. per 1 mol. of Si element in sodalite. The mixing to make a mixture was performed in water. The obtained mixture was then dried, like the method of producing the sample E1, previously described.

Next, the mixture was heated at the heating rate of 100°C/hour until 1000°C (as a firing temperature). The mixture was fired at 1000°C for ten hours. Next, the mixture after firing was pulverized to make the catalyst powder for purifying an exhaust gas having a median particle diameter (or a median grain diameter) of not more than 10 µm and a maximum particle size of not more than 100 µm. Like the sample E1, the DTA peak temperature of each of the catalyst powders was detected, where one group of which was not treated by water washing, and the other group thereof was treated by water washing was detected.

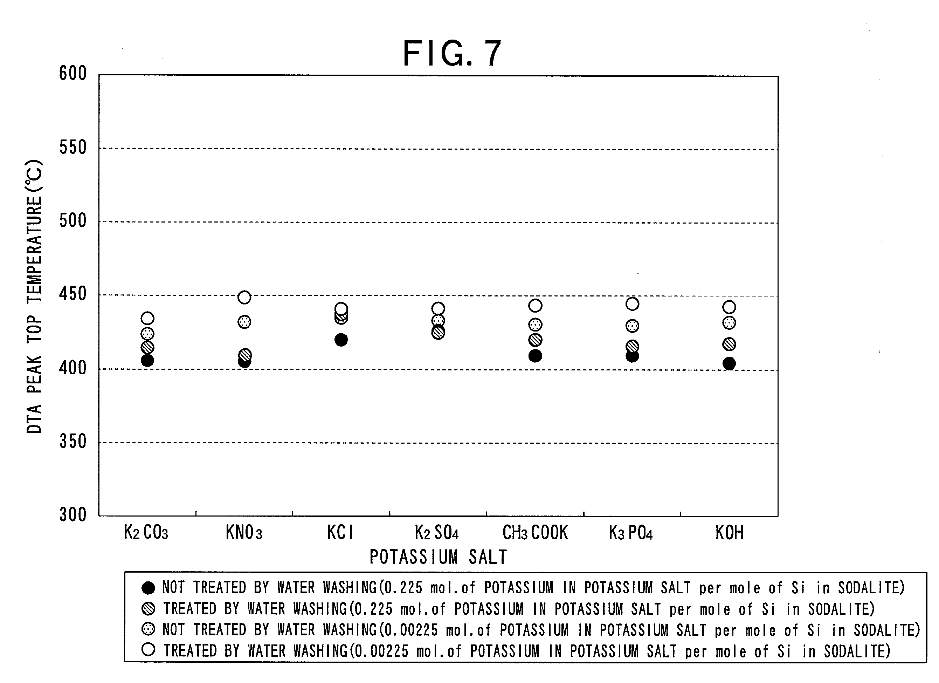

FIG. 7 is an explanatory view showing a relationship between potassium salt and DTA peak top temperature of each of the evaluation samples (not treated by water washing and are treated by water washing).

As can be understood from the detection results shown in FIG. 7, the catalysts (not treated by water washing and treated by water washing) containing any type of potassium salt have a superior catalyst activity function. When the amount of potassium salt is decreased, the catalyst activity function also decreases. But, the catalysts having a less amount of potassium maintain the superior DTA peak top temperature of not more than 450°C.

In the above evaluation samples, potassium salt was added as alkali metal element source (as alkali metal salt) into sodalite during the mixing step in the process of producing the particulate combustion catalyst. In the first embodiment, a plurality of other particulate combustion catalysts was produced by mixing sodalite and alkali metal source or alkali earth metal source, and the DTA peak top temperature of each of those catalysts containing alkali metal or alkali earth metal were detected.

Specifically, at first, the embodiment prepared a plurality of mixtures, each mixture is composed of sodalite and each of alkali metal salt (such as sodium carbonate, potassium carbonate, rubidium carbonate, and cesium carbonate) or alkali earth metal salt (such as magnesium hydroxide, calcium carbonate, strontium carbonate, and barium carbonate).

Each of the mixtures was made so that alkali metal element or alkali earth metal element in alkali metal salt or alkali earth metal salt in each mixture has 0.225 mol. or 0.00225 mol. per 1 mol. of Si element in sodalite. The mixing for each mixture was performed in water and the mixture was then dried, like the production for the sample E1, previously described.

Next, the mixture was heated at the heating rate of 100°C/hour up to 1000°C (as a firing temperature). The mixture was fired at 1000°C for ten hours. Next, the mixture after firing was pulverized to make the catalyst powder for purifying an exhaust gas having a median particle diameter (or a median grain diameter) of not more than 10 µm and a maximum particle size of not more than 100 µm. Like the sample E1, the DTA peak temperature of the catalyst powder (not treated by water washing and treated by water washing) was detected.

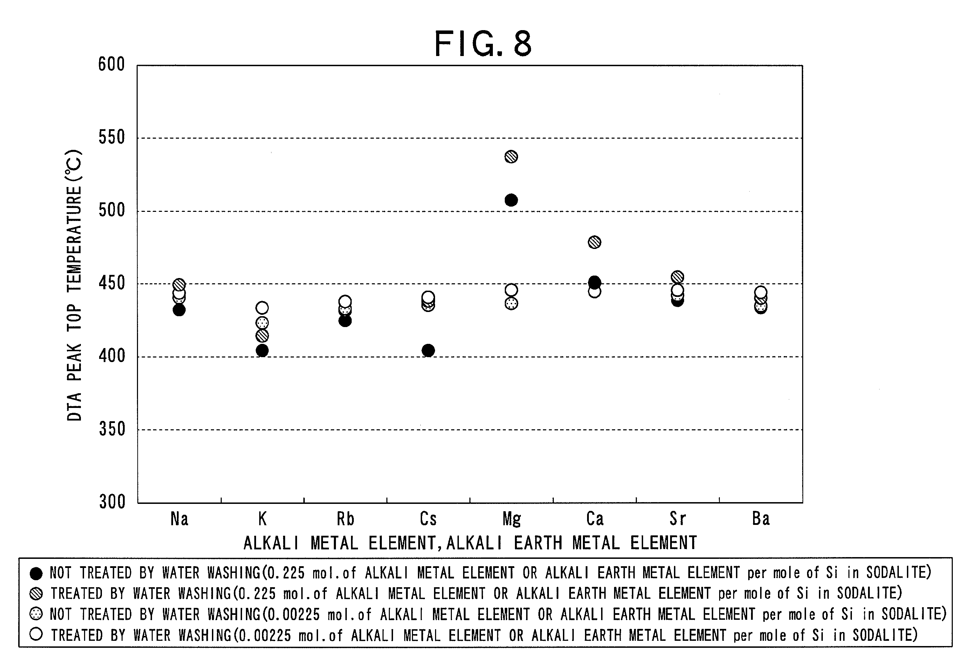

FIG. 8 is an explanatory view showing a relationship between alkali metals, alkali earth metals and DTA peak top temperature of each of evaluation samples (not treated by water washing, and treated by water washing). In FIG. 8, the horizontal axis indicates alkali metal elements in alkali metal element source and alkali earth metal element in alkali earth metal element source added into sodalite when making the mixtures. The vertical axis indicates the DTA peak top temperature.

As can be understood from the analysis results shown in FIG. 8, the catalysts containing each of alkali metal elements (Na, K, Rb, Cs), not treated by water washing and treated by water washing, have a superior catalyst activity function.

On the other hand, although the catalyst containing Mg in the catalysts made of the mixtures of sodalite and alkali earth metal elements (Mg, Ca, Sr, C) has a relatively low catalyst activity function, all of the catalysts using alkali earth metal elements have superior catalyst activity function and have no practical difficulty.

It can be understood to make the catalyst for purifying an exhaust gas having a superior catalyst activity function by mixing sodalite and alkali metal or alkali earth metal other than potassium (K) and then by firing the mixture.

The catalyst containing Mg source as alkali earth metal element will now be explained in detail. As can be understood from the detection results shown in FIG. 8, the catalyst containing Mg has a superior catalyst activity function, where the catalyst was made by adding 0.00225 mol. of Mg per 1 mol. of Si element into sodalite. The catalyst containing 0.225 mol. of Mg can be practically used, but the catalyst activity function thereof is decreased.

On the other hand, the catalysts containing alkali earth metal elements (Ca, Sr, Ba) except for Mg have the superior catalyst activity function. Accordingly, it is preferable to use alkali earth metals except for Mg when a mixture is made using sodalite.

When using Mg, it is preferable to mix sodalite and Mg source so that the mixture is made by adding less than 0.225 mol. of Mg in Mg source, or more preferably, not more than 0.00225 mol. of Mg per 1 mol. of Si element into sodalite. In the above examples, the particulate combustion catalyst was made by mixing sodalite and one alkali metal or one alkali earth metal.

Next, a description will now be given of the catalyst made of mixing sodalite and two or more alkali metals or alkali earth metals. The DTA peak top temperature of each of the obtained catalysts was detected.

Specifically, at first, sodalite, potassium carbonate, and each of alkali metal element source (sodium carbonate, rubidium carbonate, and cesium carbonate) and alkali earth metal element source (magnesium hydroxide, calcium carbonate, strontium carbonate, and barium carbonate) were mixed to make a mixture. The prepared mixture contains sodalite, potassium carbonate, and alkali metal element source and alkali earth metal element source other than potassium carbonate.

Each of the prepared mixture was made by adding potassium carbonate (potassium source) into sodalite so that the mixture is made by adding 0.1125 mol. of potassium per 1 mol. of Si element into sodalite, and by further adding 0.1125 mol. of alkali metal element or alkali earth metal element per 1 mol. of Si element into sodalite.

In each of the mixtures, the total sum of potassium in potassium carbonate and alkali metal element or alkali earth metal element per 1 mol. of Si in sodalite becomes 0.225 mol.

Like the sample E1 previously described, the mixture was prepared in water and then dried.

Next, the mixture was heated at the heating rate of 100°C/hour up to 1000°C, and placed at 1000°C for ten hours in order to fire the mixture. The fired bulk was then pulverized to make a particulate combustion catalyst powder having a median particle diameter (or a median grain diameter) of not more than 10 µm and a maximum particle size of not more than 100 µm.

The DTA peak temperature of the catalyst powder was detected, like the sample E1.

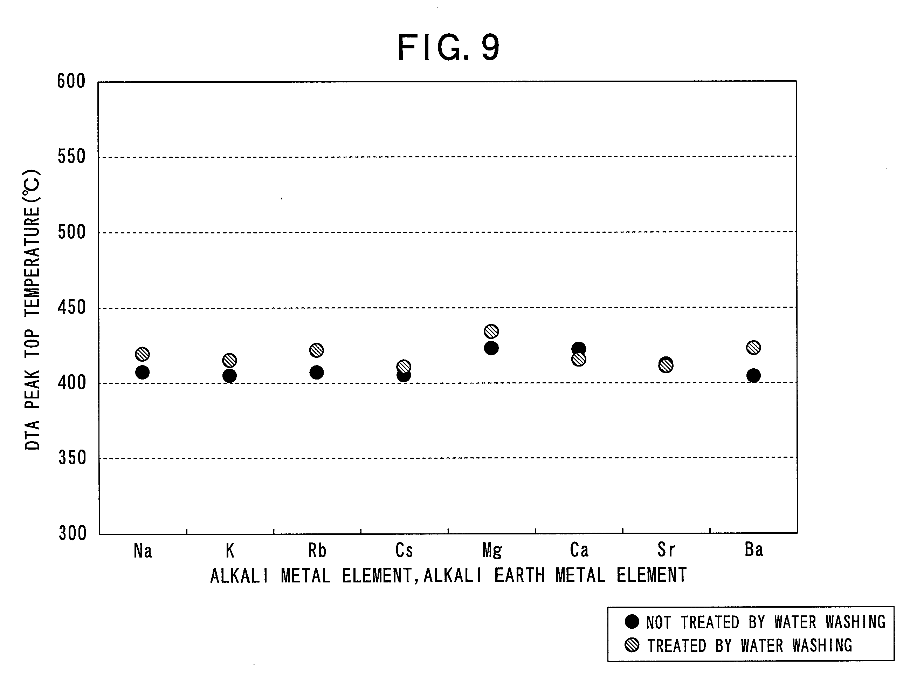

FIG. 9 is an explanatory view showing a relationship between DTA peak top temperature and a combination of alkali metals and alkali earth metals in each of evaluation samples (not treated by water washing and treated by water washing).

In FIG. 9, the vertical axis indicates the DTA peak top temperature, and the horizontal axis indicates alkali elements in alkali metal element source and alkali earth metal elements in alkali earth metal element source to be added into sodalite in addition to potassium carbonate when making the mixtures. In FIG. 9, reference character "K" designates the catalyst produced by mixing sodalite and potassium carbonate and by firing the mixture. FIG. 9 also shows the DTA peak top temperature of the catalysts, one group of which was not treated by water washing, and the other group of which was treated by water washing.

As can be understood from the detection results shown in FIG. 9, it is possible to produce the catalysts having a superior catalyst activity function, like the catalyst containing K (potassium) and sodalite, when mixing sodalite, K (potassium), and alkali metal element (Na, Rb, Cs) or alkali earth metal elements (Mg, Ca, Sr, Ba).

As described above in detail, it is possible to obtain the particulate combustion catalyst having a superior catalyst activity function even if a mixture contains a plurality of alkali metal elements and alkali earth metal elements in addition to sodalite and potassium carbonate.

Next, a description will now be given of the DTA peak top temperature of each of particulate combustion catalysts containing sodalite and a different amount of alkali metal element source and alkali earth metal element source.

At first, a mixture was made by adding potassium carbonate within a range of 0 to 100 pts.wt. per sodalite of 100 pts.wt.

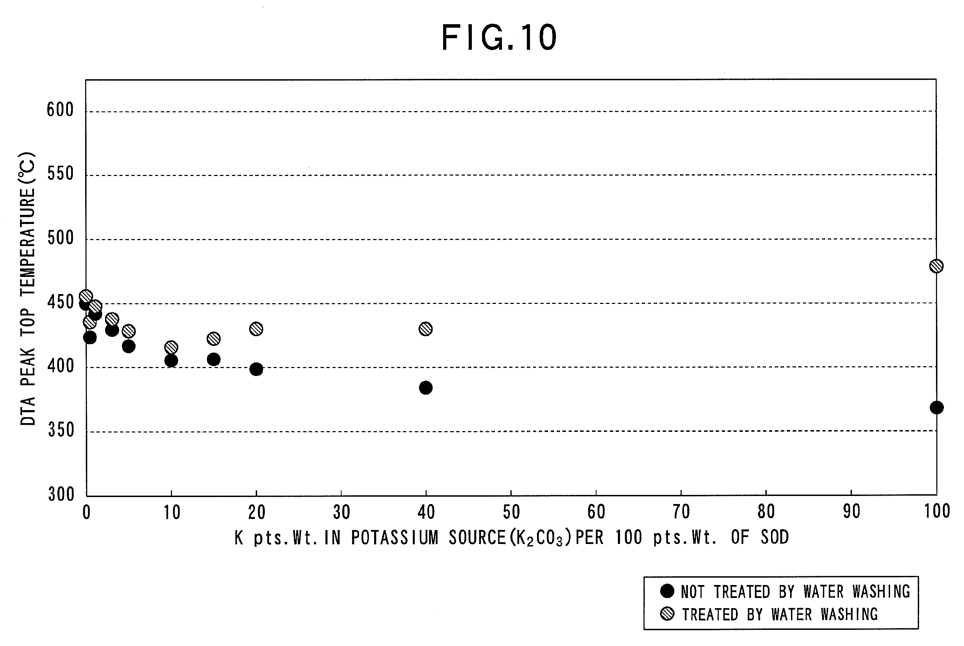

Specifically, as shown in following TABLE 1 and FIG. 10, a plurality of mixtures was made by mixing potassium carbonate of different amounts, 0 pts.wt., 0.1 pts.wt., 0.5 pts.wt., 1 pts.wt., 3 pts.wt., 5 pts.wt., 10 pts.wt., 15 pts.wt., 20 pts.wt., 40 pts.wt., and 100 pts.wt. per sodalite (SOD) of 100 pts.wt.

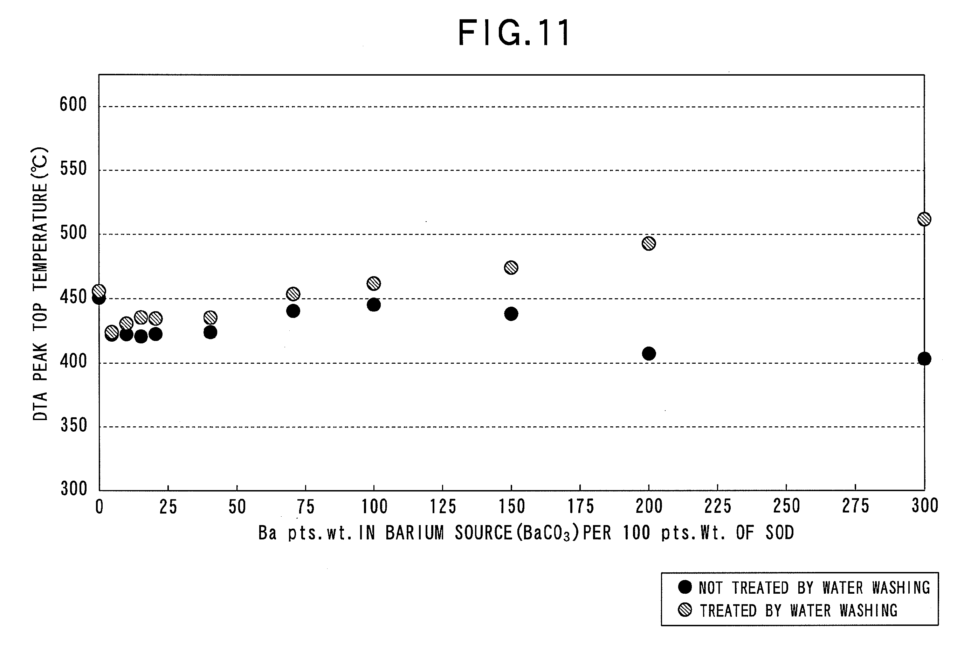

In addition, as shown in following TABLE 2 and FIG. 11, a plurality of mixtures were also made by mixing barium carbonate of different amounts, 0 pts.wt., 5 pts.wt., 10 pts.wt., 15 pts.wt., 20 pts.wt., 40 pts.wt., 70 pts.wt., 100 pts.wt., 150 pts.wt., 200 pts.wt., and 300 pts.wt. per sodalite (SOD) of 100 pts.wt.

Like the production of the sample E1, the above mixtures were mixed in water and then dried.

Each of the above mixtures was heated at the heating rate of 100°C /hour up to 1000°C, and fired at the temperature of 1000°C for ten hours in order to make fired bulk.

Next, each of the fired bulk was pulverized to make a particulate combustion catalyst powder having a median particle diameter (or a median grain diameter) of not more than 10 µm and a maximum particle size of not more than 100 µm.

The DTA peak temperature of each of the particulate combustion catalysts was detected. Those particulate combustion catalysts were divided into two groups, one group was not treated by water washing, and the other group was treated by water washing, like sample E1, previously described.

Table 1 and FIG, 10 show the detection results of the DTA peak temperature of each of the particulate combustion catalysts containing potassium carbonate (not treated by water washing and treated by water washing). Further, Table 2 and FIG, 11 show the detection results of the DTA peak temperature of each of the particulate combustion catalysts (not treated by water washing and treated by water washing) containing barium carbonate.

In particular, TABLE 1 shows mole of K (potassium) per 1 mol. of Si in sodalite that corresponds to pts.wt. of K (potassium) per sodalite of 100 pts.wt. in the mixture. Similarly, TABLE 2 shows mole of barium (Ba) per 1 mol. of Si in sodalite that corresponds to pts.wt. of barium per sodalite of 100 pts.wt. in the mixture.

**TABLE 1**

| Mixed amount (pts.wt.) of K source (K₂CO₃) per 100 pts.wt. of SOD | Mixed amount [K(mol.)/Si (mol.)] | DTA peak temperature (°C) | | Difference (°C) of DTA peak temperature not treated/treated by water washing |
|---|---|---|---|---|
| | | not treated by water washing | treated by water washing | |
| 0 | 0.00000 | 448.4 | 454.9 | 6.5 |
| 0.1 | 0.00225 | 422.2 | 432.6 | 10.4 |
| 0.5 | 0.01124 | 420.6 | 433.3 | 12.7 |
| 1 | 0.02249 | 440.4 | 446.5 | 6.0 |
| 3 | 0.06746 | 427.6 | 435.7 | 8.0 |
| 5 | 0.11243 | 415.8 | 426.1 | 10.4 |
| 10 | 0.22486 | 404.3 | 414.4 | 10.2 |
| 15 | 0.33729 | 405.4 | 420.9 | 15.5 |
| 20 | 0.44973 | 397.7 | 429.0 | 31.3 |
| 40 | 0.89945 | 384.4 | 429.0 | 44.6 |
| 100 | 2.24863 | 368.1 | 478.1 | 110.0 |

**TABLE 2**

| Mixed amount (pts.wt.) of Ba source (BaCO₃) per 100 pts.wt. of SOD | Mixed amount [Ba(mol.)/Si (mol.)] | DTA peak temperature (°C) | | Difference (°C) of DTA peak temperature not treated/treated by water washing |
|---|---|---|---|---|
| | | not treated by water washing | treated by water washing | |
| 0 | 0.00000 | 448.4 | 454.9 | 6.5 |
| 5 | 0.03937 | 421.0 | 423.1 | 2.1 |
| 10 | 0.07874 | 420.7 | 428.2 | 7.5 |
| 15 | 0.11811 | 418.9 | 433.9 | 15.0 |
| 20 | 0.15748 | 421.4 | 432.3 | 10.9 |
| 40 | 0.31497 | 423.3 | 433.5 | 10.3 |
| 70 | 0.55120 | 439.7 | 451.9 | 12.2 |
| 100 | 0.78742 | 444.1 | 459.8 | 15.6 |
| 150 | 1.18113 | 437.4 | 471.8 | 34.4 |
| 200 | 1.57484 | 406.3 | 491.5 | 85.3 |
| 300 | 2.36226 | 402.7 | 511.2 | 108.5 |

As can be understood from the detection results from TABLE 1, TABLE 2, FIG. 10, and FIG. 11, the particulate combustion catalysts made from the mixtures having a different amount of alkali metal element and alkali earth metal element in a mixture have a superior PM combustion promoting function.

On the other hand, the more the amount of alkali metal element or alkali earth metal element is increased, the more the difference in DTA peak temperature between the catalysts is increased, where one group of the catalysts was not treated by water washing and the other group thereof was treated by water washing.

As can be understood from TABLE 1 and TABLE 2, when sodalite and alkali metal element (K, potassium) or alkali earth metal element are mixed so that the mixture has not more than 2.25 mol. of alkali metal element in alkali metal source (K₂CO₃) or 2.25 mol. of alkali earth metal element (Ba) in alkali earth metal source (Ba, Barium) per 1 mol. of Si element in sodalite, it is possible to make the particulate combustion catalyst having a relatively small DTA peak temperature regardless the water washing treatment. That is, it is possible to produce the particulate combustion catalyst having a superior durability to water or moisture contained in an exhaust gas. In addition, the mixture containing alkali metal element or alkali earth metal element of more than 2.25 mol., becomes easily fusible during firing, and as a result, this makes it difficult to pulverize the fired mixture.

Considering from the above detection results, it is more preferable to make a mixture of alkali metal element or alkali earth metal element of not more than 1 mol., more preferably, of not more than 0.5 mol. per 1 mol. of Si element in sodalite.

As described above, according to the first embodiment of the present invention, by firing the mixture of sodalite and alkali metal element and/or alkali earth metal element at a temperature of not less than 600°C, it is possible to produce the particulate combustion catalyst capable of stably burning and removing PM from an exhaust gas at a low temperature for a long period of time.

It is possible to apply the particulate combustion catalyst according to the first embodiment to a particulate sensor for use to detect an amount of particulate matter contained in an exhaust gas emitted from an internal combustion engine.

### Second embodiment

A description will be given of the production of the particulate combustion catalyst and the evaluation of function of the catalyst according to the second embodiment of the present invention.

In the second embodiment, sodalite was used as zeolite. Specifically, sodalite powder (3(Na₂O • Al₂O₃ • 2SiO₂) • 2NaOH) was firstly prepared.

The sodalite powder was fired at 1000°C. In more detail, the sodalite was heated at the heating rate of 100°C/hour up to 1000°C (as a firing temperature). The sodalite was fired at 1000°C for ten hours. Next, the sodalite after firing was pulverized to make the particulate combustion catalyst powder having a median particle diameter (or a median grain diameter) of not more than 10 µm and a maximum particle diameter of not more than 100 µm. This catalyst will be referred to as the "sample E2".

Next, PM combustion promoting function of the particulate combustion catalyst (sample E2) were detected. The PM combustion promoting function for a noble metal catalyst (Pt powder) and a potassium carbonate powder were also detected as comparison samples.

Specifically, four types of the evaluation samples such as carbon black (CB) only, a mixture of noble metal catalyst and CB, a mixture of the sample E2 and CB, and a mixture of potassium carbonate and CB were prepared, like the first embodiment.

Next, like the method of the first embodiment, the DTA peak temperature was detected for each of the catalyst samples.

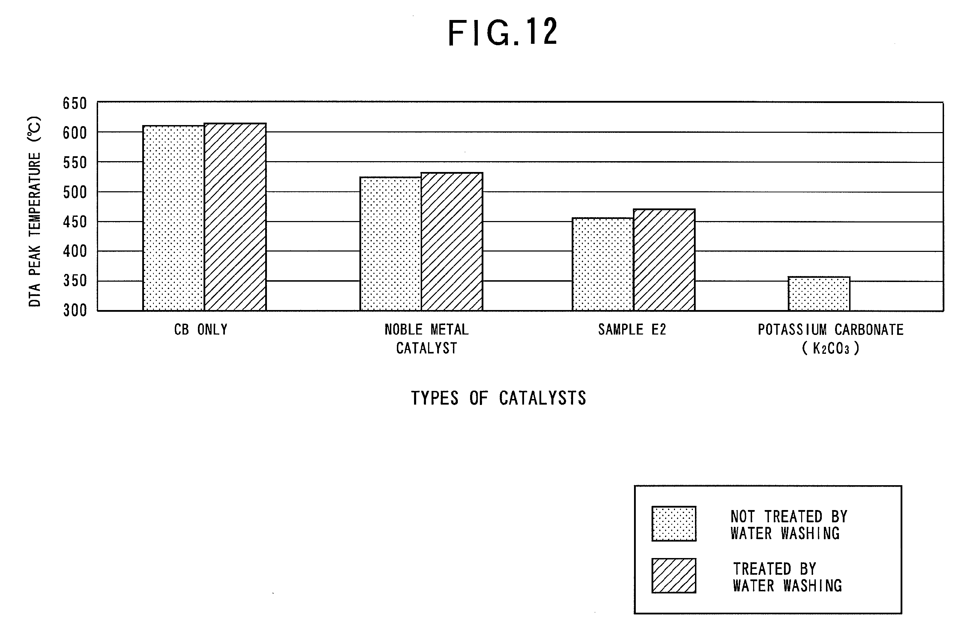

FIG. 12 is an explanatory view showing the DTA peak temperature of each of the evaluation samples (one group was not treated by water washing and the other group was treated by water washing). The evaluation samples contained carbon black (CB) only, noble metal catalyst and CB, sample E2 and CB, and potassium carbonate and CB, respectively, were burned.

In addition, like the first embodiment, each of the catalyst samples (sample E2, noble metal catalyst, and potassium carbonate powder) was treated by water washing and then dried. After the drying step, each of the dried catalysts (sample E2 and noble metal catalyst) and CB were mixed to prepare the two evaluation samples. The evaluation sample containing CB only was prepared by the same process of the first embodiment.

Because the evaluation sample using potassium carbonate as catalyst was dissolved by water, it was impossible to detect the DTA peak temperature of the evaluation sample including potassium carbonate.

That is, the second embodiment used the three types of the evaluation samples made of CB only, the mixture of noble metal catalyst and CB, and the mixture of sample E2 and CB. The DTA peak temperature of each of the above evaluation samples was detected by the apparatus of simultaneously detecting thermal analysis - difference in temperature between sample and reference material (TG - DTA). FIG. 12 shows the detection results regarding the DTA peak temperatures of those evaluation samples.

As can be understood from the detection results shown in FIG. 12, the evaluation samples, containing the sample E2 and potassium carbonate, have a low DTA peak temperature. This means that those evaluation samples can burn PM (CB) at a relatively low temperature. Although the detection results shown in FIG. 12 indicates that the sample E2 has the DTA peak temperature of approximately 450°C, the sample E2 can start on burning CB at a low temperature (for example, approximately 400°C).

As can be understood from FIG. 12, there were no differences in CB combustion promoting function between the evaluation samples containing CB only, noble metal catalyst, and sample E2 regardless of the water washing treatment. On the other hand, it was impossible to detect the CB combustion promoting function of the evaluation sample containing potassium carbonate because potassium carbonate was dissolved by the water washing treatment.

Accordingly, the sample E2 has the superior PM combustion promoting function to burn and remove PM contained in an exhaust gas at a low temperature. Further, the sample E2 can maintain the PM combustion promoting function in the presence of water or moisture and can stably burn PM for a long period of time.

In the second embodiment, additional three catalyst samples for evaluation were prepared. The three catalyst samples were made of sodalite and fired at different temperatures.

That is, although potassium carbonate in the sample E2 was fired at 1000°C (for ten hours), previously described, the three catalyst samples were fired at different temperatures, 700°C (for ten hours), 600°C (for ten hours), and 500°C (for ten hours).

The PM combustion promoting function of the three catalyst samples were detected, like the sample E2. At the same time, the comparison sample made of sodalite powder was prepared and the PM combustion promoting function thereof was detected. The sodalite powder was not fired and held at room temperature (approximately 25°C) for approximately ten hours. The PM combustion promoting function of the comparison samples was detected by detecting the DTA peak temperature, like the same method of detecting the sample E2.

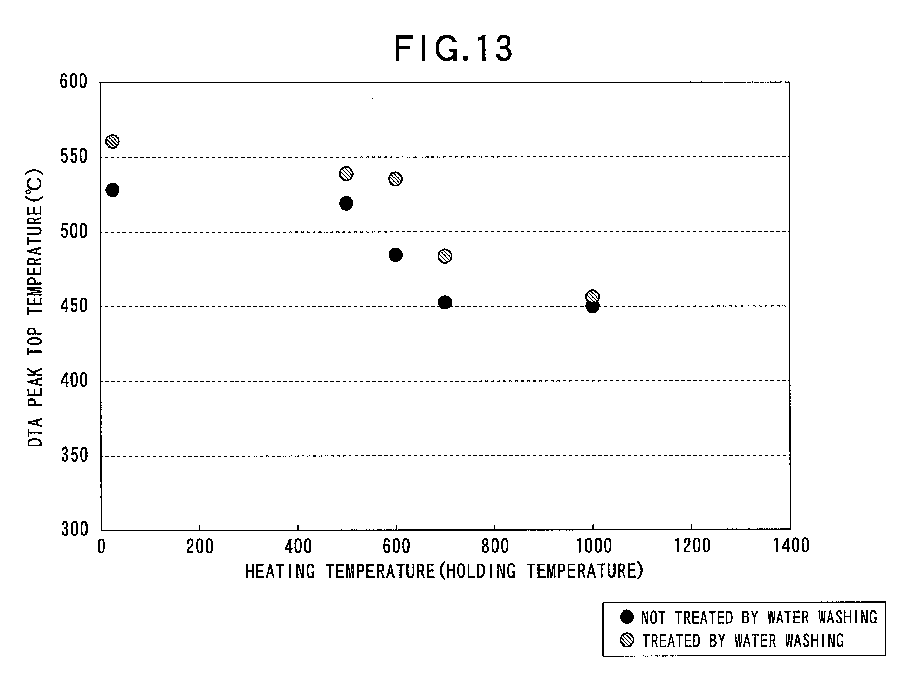

FIG. 13 is an explanatory view showing a relationship between different firing temperature and DTA peak temperature of the evaluation samples containing only sodalite (one group was not treated by water washing, and the other group was treated by water washing). FIG. 13 also shows the detection result of the DTA peak top temperature of the sample E2 that was fired at 1000°C.

As can be understood from the detection results shown in FIG. 13, the particulate combustion catalyst made of sodalite, which was fired at the temperature of not less than 600°C, has the DTA peak top temperature of not more than 500°C. On the other hand, because the DTA peak top temperature of noble metal catalyst (Pt), which is commonly used, is approximately 520°C (see FIG. 1), it may be said that the particulate combustion catalyst made of sodalite, which was fired at not less than 600°C, has a superior PM combustion promoting function.

Further, it may be understood the particulate combustion catalyst made of sodalite, which was treated by water washing and fired at not less than 600°C, also has the superior catalyst activity function because the DTA peak temperature thereof has the same value or a lower value of that of the noble metal (Pt) catalyst.

On the other hand, the catalyst sample made of sodalite which was not treated by water washing and fired at the temperature of 500°C approximately has the same DTA peak temperature (approximately 520°C) of the noble metal (Pt) catalyst. However, the catalyst sample made of sodalite which was treated by water washing and was fired at the temperature of 500°C has the DTA peak temperature of approximately 540°C. That is, this catalyst sample treated by water washing and fired at 500°C has a low catalyst activity function which is lower than that of the noble metal catalyst.

Still further, the catalyst sample made of sodalite which was not fired has a poor catalyst activity function regardless of water washing treatment.

The second embodiment prepared comparison samples containing various types of zeolite other than sodalite (SOD). Those comparison samples were compared in the PM combustion promoting function with the sample E2.

Specifically, evaluation samples of twelve types of zeolite except for sodalite were prepared, such as BEA type, FAU (faujasite) type, FER type, LTA type, LTL type, MFI type, and MOR type, and/or zeolites having different composition of SiO₂/Al₂O₃. Those zeolite were manufactured by TOSOH Corporation in Japan. TABLE 3 shows information of the twelve types of zeolite, Product name, type, and chemical composition. TABLE 3 also shows sodalite (SOD) contained in sample E2.

**TABLE 3**

| Zeolite Product name | Type of zeolite structure | Chemical formula | SiO₂/Al₂O₃ (mol/mol) |
|---|---|---|---|
| - | SOD | (3(Na₂O • Al₂O₃ • 2SiO₂) • 2NaOH) | 2.0 |
| A-3 | LTA | - | 2.0 |
| A-4 | LTA | - | 2.0 |
| F-9 | FAU | - | 2.5 |
| HSZ-642NAA | MOR | - | 17.7 |
| HSZ-320NAA | FAU | - | 5.5 |
| HSZ-500KOA | LTL | - | 6.1 |
| HSZ-390HUA | FAU | - | 750.0 |
| HSZ-690HOA | MOR | - | 230.0 |
| HSZ-720KOA | FER | - | 17.5 |
| HSZ-820NAA | MFI | - | 23.8 |
| HSZ-940HOA | BEA | - | 39.0 |
| HSZ-980HOA | BEA | - | 430.0 |

Next, each of the evaluation samples (the twelve types of zeolite) shown in TABLE 3 was fired by the same method of sample E2. Specifically, each zeolite was heated at the heating rate of 100°C/hour up to 1000°C (as the firing temperature) and then was held at 1000°C for ten hours in order to fire the bulk. Next, the fired bulk was pulverized to make a catalyst powder having a median particle diameter (or a median grain diameter) of not more than 10 µm and a maximum particle size of not more than 100 µm. The PM combustion promoting function of the catalyst powder was detected. The second embodiment did not detect the PM combustion promoting function of the catalyst powder which was treated by water washing.

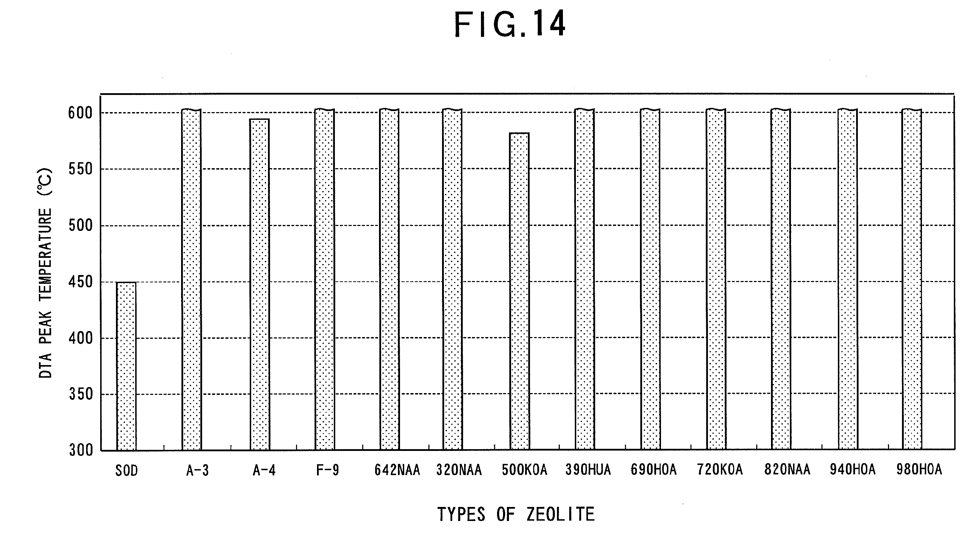

FIG. 14 is an explanatory view showing a relationship between zeolite and DTA peak temperature of a particulate combustion catalyst according to the second embodiment of the present invention. FIG. 14 shows the detection result of sample E2 containing fired sodalite.

As can be understood from the detection results shown in FIG. 14, the evaluation samples as the catalysts made of zeolite except for sodalite (SOD) have an extremely high DTA peak temperature, that is, have not adequate PM combustion promoting function. On the other hand, the catalyst (sample E2) containing fired sodalite (SOD) has a very low DTA peak temperature of approximately 450°C. This means that the catalyst made of SOD has the adequate PM combustion promoting function to burn PM at a low temperature. It is preferable to select sodalite in various types of zeolite when the catalyst is made using zeolite.

As described above in detail, according to the second embodiment of the present invention, it is understood that the catalyst containing SOD fired at the temperature of not less than 600°C has a superior PM combustion promoting function and can stably maintain this function for a long period of time.

It is possible to apply the particulate combustion catalyst according to the second embodiment to a particulate sensor for use to detect an amount of particulate matter contained in an exhaust gas emitted from an internal combustion engine.

### Third embodiment

A description will be given of the production of the particulate combustion catalyst and the evaluation of function of the catalyst according to the third embodiment of the present invention.

Specifically, zeolite of LTA type other than sodalite was prepared. This zeolite of LTA type ("A-3" manufactured by TOSOH Corporation in Japan) was made of 2.0 mol. of SiO₂ (SiO₂/Al₂O₃) per 1 mol. of Al₂O₃. In addition, potassium carbonate was prepared as alkali metal element source.

Next, the zeolite and potassium carbonate, which provides the relationship in composition of 0.225 mol. of potassium per 1 mol. of Si element in zeolite, were added into water and then mixed.

Next, the mixed solution was heated at a temperature of 120°C/hour to evaporate water component. This made a bulk of the mixture of sodalite and potassium carbonate.

Next, the bulk was fired at the temperature of 1000°C. Specifically, the bulk was heated at the heating rate of 100°C/hour until 1000°C (as the firing temperature) and then was held at 1000°C for ten hours in order to fire the bulk.

Next, the fired bulk was pulverized to make a particulate combustion catalyst powder having a median particle diameter (or a median grain diameter) of not more than 10 µm and a maximum particle size of not more than 100 µm. This powder will be referred to as the "sample E3".

Next, PM combustion promoting function of the particulate combustion catalyst (sample E3) was detected. The PM combustion promoting function for a noble metal catalyst (Pt powder) and a potassium carbonate powder were also detected as comparison samples.

Specifically, like the first embodiment, the four types of evaluation samples (containing CB only, a mixture of noble metal catalyst and CB, a mixture of sample E3 and CB, and a mixture of potassium carbonate and CB) were produced.

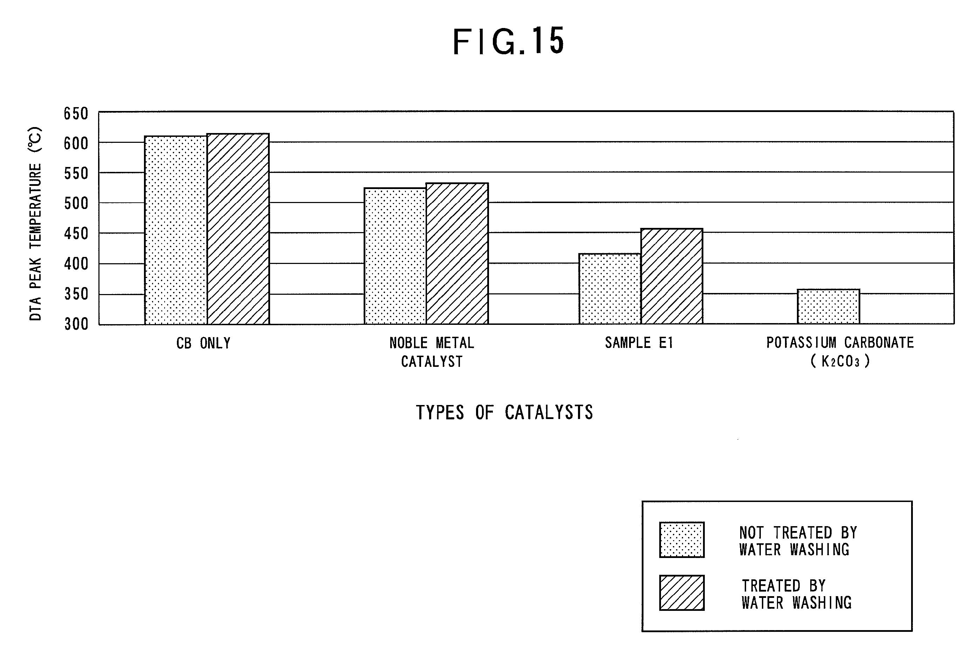

Next, like the first embodiment, the DTA peak temperature of the evaluation samples were detected. FIG. 15 is an explanatory view showing the relationship between the DTA peak temperature and the evaluation samples.

Next, like the first embodiment, other evaluation samples were also prepared using sample E3, noble metal catalyst, and potassium carbonate powder. Those sample E3, noble metal catalyst, and potassium carbonate powder were treated by water washing and then dried. Each sample after drying and CB was mixed. Like the first embodiment, the evaluation sample containing only CB treated by water washing was prepared. Because the evaluation sample containing potassium carbonate was dissolved by the water washing treatment, this evaluation sample was not used.

That is, the evaluation in the third embodiment used the three types of the evaluation samples, which were treated by water washing, containing CB only, containing the mixture of noble metal catalyst and CB, and containing the mixture of sample E3 and CB. The DTA peak temperature was detected for each of the three types of the evaluation samples. FIG. 15 also shows the DTA peak temperature as the evaluation results of the various evaluation samples treated by water washing.

As can be understood from the detection results shown in FIG. 15, the evaluation samples containing the sample E3 and potassium carbonate, which were not treated by water washing, have a low DTA peak temperature. This means that those evaluation samples can burn PM (also CB) at a low temperature. As can be understood from FIG. 15, although the evaluation sample containing the sample E3 has the DTA peak temperature of approximately 410°C, it may be considered that the combustion of CB in sample E3 was actually started at a lower temperature (for example, approximately at 360°C).

As can be understood from the evaluation results shown in FIG. 15, the PM combustion promoting function of the evaluation samples only containing CB, containing noble metal catalyst, and containing the sample E3 were not almost changed regardless of the water washing treatment.

In particular, the evaluation sample containing the sample E3 treated by water washing has a largest drop in PM combustion promoting function when compared with the evaluation sample containing the sample E3 which was not treated by water washing. However, the PM combustion promoting function of the evaluation sample containing the sample E3 treated by water washing has approximately 450°C, which is adequately lower than that of the other evaluation sample containing CB only, and the evaluation sample containing noble metal catalyst.

Therefore it may be said that the sample E3 has a superior PM combustion promoting function even if it was treated by water washing.

On the other hand, because the evaluation sample containing potassium carbonate was dissolved into water by the water washing treatment, it is impossible to detect the PM combustion promoting function.

As described above, the catalyst (sample E3) made of zeolite other than sodalite has a superior PM combustion promoting function. Still further, because the sample E3 as catalyst can maintain the PM combustion promoting function in the presence of water or moisture, it is possible for the sample E3 to stably burn PM for a long period of time. Still further, because the sample E3 is a low price, when compared with noble metal catalyst, it is possible to manufacture the particulate combustion catalyst with a low cost.

It is possible to apply the particulate combustion catalyst (sample E3) according to the third embodiment to a particulate sensor for use to detect an amount of particulate matter contained in an exhaust gas emitted from an internal combustion engine.

### Fourth embodiment

A description will be given of the production of the particulate combustion catalyst and the evaluation of function of the catalyst according to the fourth embodiment of the present invention.

The fourth embodiment produces various types of catalysts having different compositions and detects the PM combustion promoting function thereof.

The method of producing the evaluation samples according to the fourth embodiment is the same of that of the third embodiment except for changing types of zeolite.

Specifically, nine types of zeolite having different composition and/or ratio (mole ratio) of SiO₂/Al₂O₃ in zeolite were prepared. The nine types of zeolite included the zeolite ("A-3" manufactured by TOSOH Corporation in Japan) used in the production of sample E3 according to the third embodiment, previously described.

The prepared zeolite were LTA type, BEA type, FAU (faujasite) type, FER type, LTL type, MFI type, or MOR type (see TABLE 3). Those zeolite were manufactured by TOSOH Corporation in Japan. The fourth embodiment used the zeolite of TOSOH Corporation, the product names thereof are A-3, A-4, F-9, 642NAA, 320NAA, 500KOA, 720KOA, 820NAA, and 940HOA (see TABLE 3).

Next, each type of zeolite and potassium carbonate were mixed in water solution, like the third embodiment. The mixed solution was dried to evaporate water component thereof. This made a bulk of the mixture of zeolite and potassium carbonate.

Like the third embodiment, it was mixed so that the zeolite and potassium carbonate satisfies the relationship in composition of 0.225 mol. of potassium in potassium carbonate per Si element of 1 mol. in each zeolite.

Next, the bulk was heated at the heating rate of 100°C/hour until 1000°C (as a firing temperature) and was held at 1000°C for ten hours in order to fire the bulk.

Next, the fired bulk was pulverized to make a particulate combustion catalyst powder having a median particle diameter (or a median grain diameter) of not more than 10 µm and a maximum particle size of not more than 100 µm.

The fourth embodiment made the nine types of the particulate combustion catalysts (or the "evaluation catalyst" for short) by the above processes.

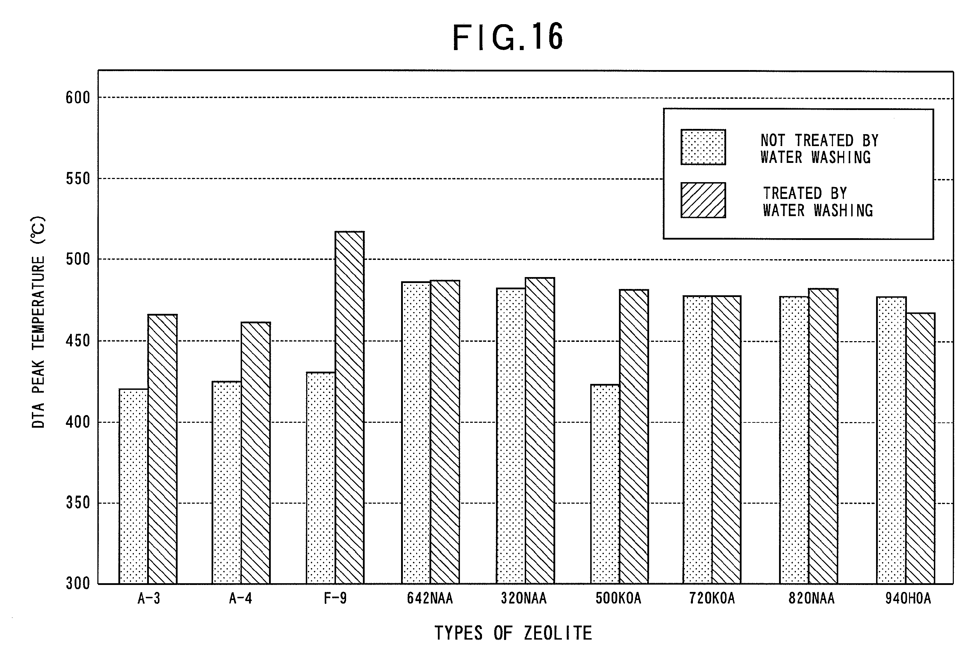

Like the first embodiment, PM combustion promoting function of the particulate combustion catalysts were detected, in which one group was not treated by water washing and the other group was treated by water washing. FIG. 16 shows the detection results of the PM combustion promoting function of the nine types of the evaluation catalysts which were fired.

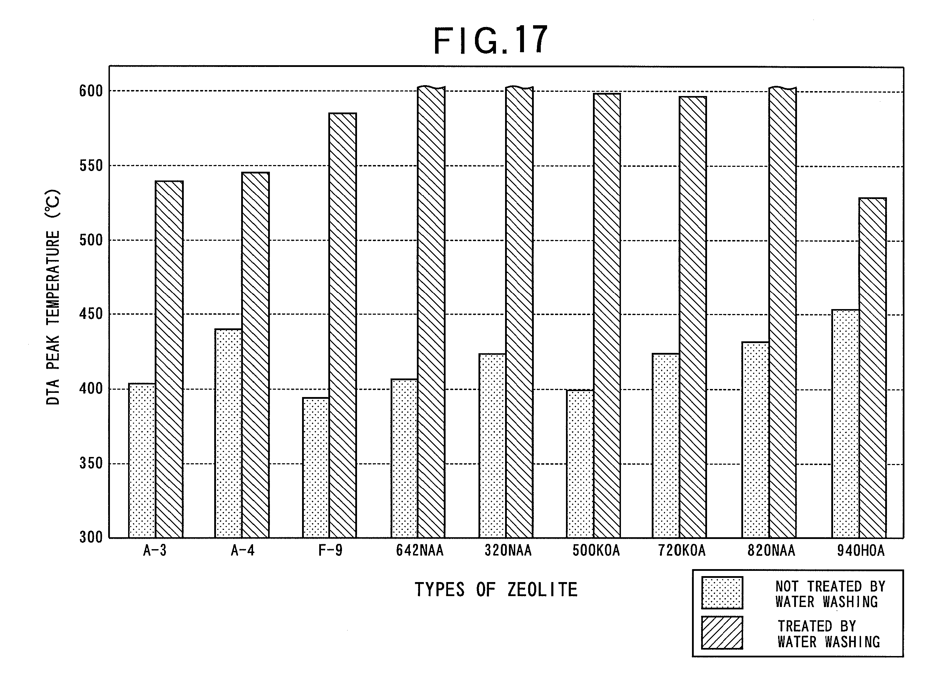

In the fourth embodiment, the mixture of potassium carbonate and each of the evaluation catalysts, in which one group was not treated by water washing and the other group was treated by water washing, were detected before firing. FIG. 17 shows the detection results of the PM combustion promoting function of the nine types of the pre-firing evaluation catalysts.

As can be understood from the detection results shown in FIG. 16, the evaluation catalysts, which were not treated by water washing, had a low DTA peak temperature of approximately 480°C. This DTA peak top temperature of approximately 480°C is adequately lower than the DTA peak temperature (approximately 520°C, see FIG. 15) of noble metal catalyst (Pt), which is commonly used as PM combustion catalyst.

This indicates that the particulate combustion catalyst containing various types of zeolite has a superior PM combustion promoting function capable of burning PM at a low temperature.

In addition, as can be understood from the detection results shown in FIG. 16, each of the particulate combustion catalysts containing various types of zeolite, treated by water washing, has the same or lower DTA peak temperature of the noble metal (Pt) catalyst (DTA peak temperature is approximately 520°C, see FIG. 15). This indicates that the particulate combustion catalysts containing above various types of zeolite can maintain the superior PM combustion promoting function in the presence of water or moisture.

Still further, as can be understood from the detection results shown in FIG. 17, the pre-firing catalysts containing the mixtures of potassium carbonate and various types of zeolite, which were not treated by water washing, have a very low DTA peak temperature. On the other hand, the pre-firing catalysts containing the mixture which were treated by water washing have a higher DTA peak temperature.

On the other hand, as described above, the fired catalysts suppress rising of the DTA peak temperature, as shown in FIG. 16. It is therefore possible to increase the durability of the catalyst to water or moisture by firing the bulk of the mixture of zeolite and potassium carbonate.

As described above in detail, according to the fourth embodiment of the present invention, it is possible to provide the particulate combustion catalysts containing various types of zeolite capable of stably burning PM at a low temperature for a long period of time even if used in the presence of water or moisture.

It is possible to apply the particulate combustion catalyst according to the fourth embodiment to a particulate sensor for use to detect an amount of particulate matter contained in an exhaust gas emitted from an internal combustion engine.

### Fifth embodiment

A description will be given of the production of the particulate combustion catalyst and the evaluation of function of the catalyst according to the fifth embodiment of the present invention. That is, the fifth embodiment produced a plurality of catalysts by firing mixtures of zeolite and potassium carbonate at different firing temperatures. The fifth embodiment detected the PM combustion promotion function of the evaluation catalysts. The fifth embodiment produced the evaluation catalysts by the same method of the third embodiment except for changing the firing temperature.

Specifically, like the method of the third embodiment, potassium carbonate and zeolite of LTA type having a ratio (mole ratio) of SiO₂/Al₂O₃ of 2.0 (product name "A-3" manufactured by TOSOH Corporation in Japan) were mixed to make a plurality of mixtures. Like the third embodiment, the mixtures were obtained in water solution. In particular, it was mixed so that the zeolite and potassium carbonate satisfied the relationship in composition of 0.225 mol. of potassium per 1 mol. of Si element in zeolite.

Next, a plurality of evaluation catalysts was made by firing the mixtures at different firing temperatures.

Specifically, the mixtures were fired at different firing temperatures such as 500°C, 600°C, 700°C, 800°C, 900°C, 1000°C, 1100°C, 1200°C, and 1300°C. That is, the mixtures were heated at the heating rate of 100°C/hour up to each of the above firing temperatures, and placed at the firing temperatures to fire the mixtures, respectively. After completion of the firing nine types of samples (or bulks) were obtained.

Next, each of the fired bulks was pulverized to make a particulate combustion catalyst powder having a median particle diameter (or a median grain diameter) of not more than 10 µm and a maximum particle size of not more than 100 µm. The nine catalysts were thereby made.

Like the sample E3 according to the third embodiment, the nine types of the catalysts were detected for PM combustion promoting function. At the same time, a comparison sample was also prepared, made of a mixture of zeolite (A-3, see TABLE 3) and potassium carbonate which was not fired. The comparison example was not fired, but was held at room temperature (approximately 25°C) for ten hours, instead.

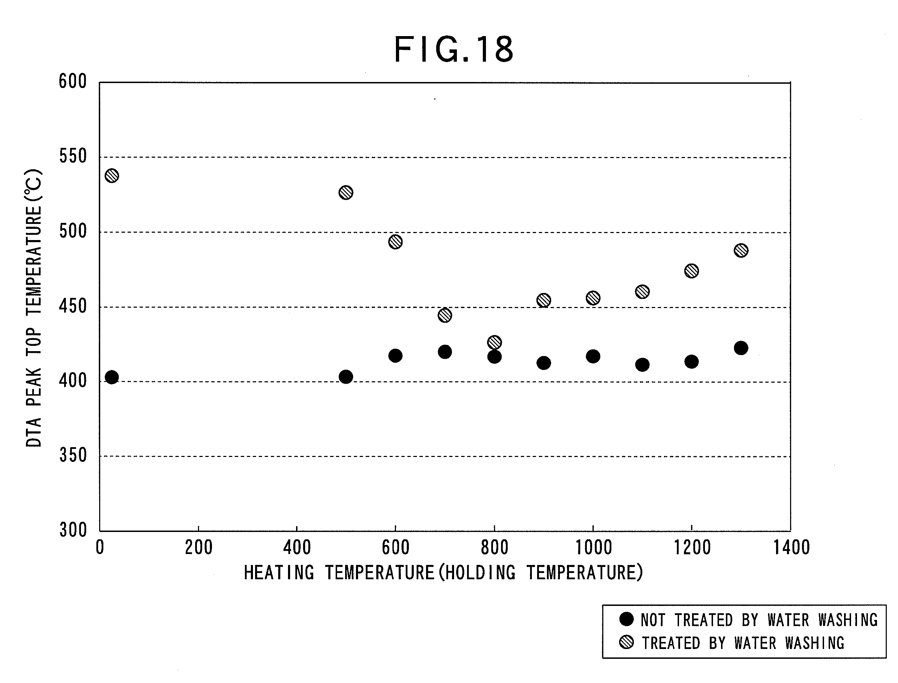

Like the sample E3 according to the third embodiment, the DTA peak top temperature of each of the nine catalysts and the comparison example was detected. FIG. 18 shows the detection results of the DTA peak top temperature of the nine catalysts and the comparison sample.

As can be understood from the detection results shown in FIG. 18, the DTA peak top temperature of each of the catalysts fired at the temperature of not less than 600°C (in which one group was not treated by water washing and the other group was treated by water washing) was below 500°C. Because the DTA peak temperature of a noble metal (Pt) catalyst, which is commonly used as a combustion catalyst for particulate matter, is approximately 520°C (see FIG. 15), the evaluation catalysts fired at a temperature of not less than 600°C according to the fifth embodiment have the superior PM combustion promoting function.

On the other hand, as shown in FIG. 18, the DTA peak top temperature of the evaluation catalysts fired at a temperature of less than 600°C, which were not treated by water washing, had the DTA peak temperature which was adequately lower than the DTA peak temperature of the noble metal catalyst. However, the DTA peak top temperature of the above catalysts, which were treated by water washing and fired at less than 600°C, had the increased DTA peak temperature which was higher than the DTA peak temperature of the noble metal catalyst. That is, it may be said that the catalyst which was treated by water washing and fired at a temperature of less than 600 °C has an insufficient PM combustion promoting function.

By the way, the catalysts made of the mixture of zeolite and potassium carbonate, which was not treated by water washing and not fired, had a superior PM combustion promoting function. However, the PM combustion promoting function of the catalyst made of the mixture of zeolite and potassium carbonate, which were treated by water washing and was not fired, was extremely decreased.

The reason why the PM combustion promoting function of the catalysts, which were treated by water washing, and fired at a temperature of less than 600°C or not fired, was extremely decreased is that potassium carbonate was dissolved into water by the water washing treatment.

According to the fifth embodiment of the present invention, it is preferable to fire or heat the mixture of zeolite and potassium carbonate at a temperature of not less than 600°C, more preferable to fire the mixture at a temperature within a range of 800°C to 1100°C, as can be understood from the detection results shown in FIG. 18. The above manufacturing condition provides the particulate combustion catalyst having a superior PM combustion promoting function with water proof capability (or water resistance).

It is possible to apply the particulate combustion catalyst according to the fifth embodiment to a particulate sensor for use to detect an amount of particulate matter contained in an exhaust gas emitted from an internal combustion engine.

### Sixth embodiment

A description will be given of the method of producing the particulate combustion catalyst and the evaluation of function of the catalyst according to the sixth embodiment of the present invention.

That is, the sixth embodiment detected the influence of the amount of alkali metal element (potassium carbonate) added into zeolite to make a mixture to the PM combustion promoting function.

That is, the sixth embodiment prepared a plurality of catalysts. Each of the catalysts was made of a mixture composed of zeolite and a different amount of potassium carbonate. The sixth embodiment detected the PM combustion promoting function of the above catalysts.

The catalysts according to the sixth embodiment were made by the same method of the third embodiment except for the mixing ratio of zeolite and potassium carbonate.

Specifically, like the method of the third embodiment, zeolite of LTA type having a mole ratio of SiO₂/Al₂O₃ of 2.0 (product name "A-3" manufactured by TOSOH Corporation in Japan) was prepared. Next, zeolite of 100 pts.wt. and potassium carbonate within a range of 0 to 100 pts.wt. were mixed to make a mixture.

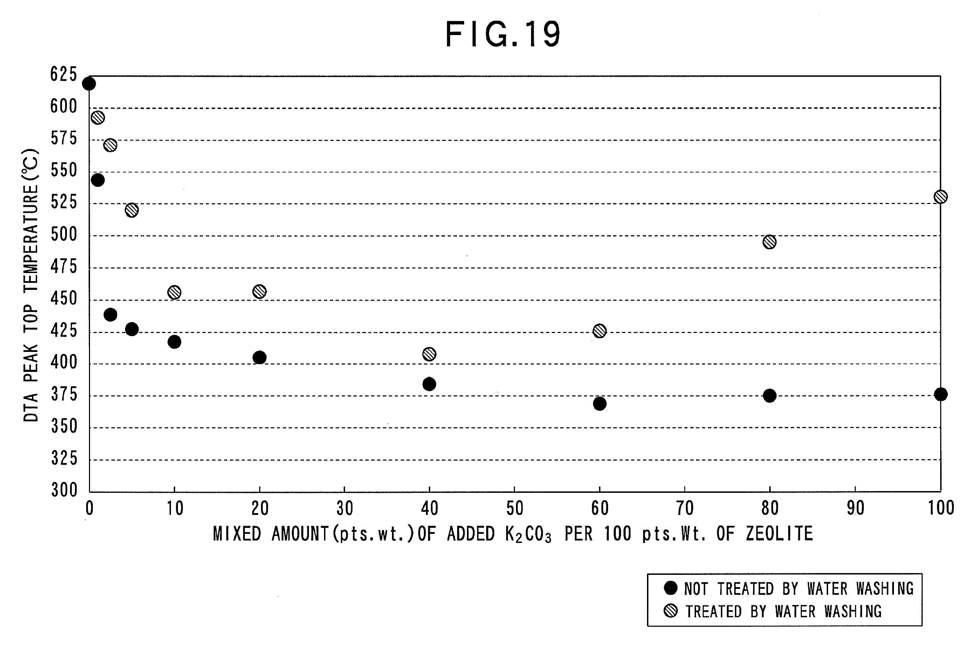

Specifically, as shown in following TABLE 4 and FIG. 19, a plurality of mixtures were made by mixing potassium carbonate of 0 pts.wt., 1 pts.wt., 2.5 pts.wt., 5 pts.wt., 10 pts.wt., 20 pts.wt., 40 pts.wt., 60 pts.wt., 80 pts.wt., and 100 pts.wt. per zeolite of 100 pts.wt. Like the preparation of sample E3 in the third embodiment, those mixtures were prepared in water solution. The mixtures were dried to evaporate water component and to make the mixtures of a different composition ratio of potassium.

Next, the mixtures were heated at the heating rate of 100°C/hour until 1000°C and then held at 1000°C for ten hours in order to fire the mixtures as bulks.

Each of the fired bulks was then pulverized to make the catalyst powder having a median particle diameter (or a median grain diameter) of not more than 10 µm and a maximum particle size of not more than 100 µm. The above processes prepared the ten types of the particulate combustion catalysts of different potassium composition ratio.

The sixth embodiment detected the PM combustion promoting function of each of the ten types of the catalysts, in which one group of the catalysts was not treated by water washing and the other group was treated by water washing. Like the method of detecting the sample E3 according to the third embodiment, the DTA peak temperature of each of the catalysts was detected. TABLE 4 and FIG. 19 show the detection results of the DTA peak top temperatures. Further, TABLE 4 shows mole of K (potassium) per 1 mol. of Si in zeolite that corresponds to pts.wt. of K (potassium) per zeolite of 100 pts.wt. in the mixture.

**TABLE 4**

| | | | | |
|---|---|---|---|---|
| Mixed amount | Mixed amount | DTA peak temperature (°C) | Difference (°C) of DTA | |

| (pts.wt.) of K source (K₂CO₃) per 100 pts.wt. of zeolite | [K(mol.)/Si (mol.)] | not treated by water wahsing | treated by water washing | peak temperature not treated/treated by water washing |
|---|---|---|---|---|
| 0 | 0.00000 | 619.1 | - | - |
| 1 | 0.02149 | 543.1 | 592.1 | 49.1 |
| 2.5 | 0.05372 | 438.9 | 571.2 | 132.3 |
| 5 | 0.10745 | 427.5 | 518.9 | 91.4 |
| 10 | 0.21489 | 417.8 | 455.9 | 38.1 |
| 20 | 0.42979 | 404.2 | 456.5 | 52.3 |
| 40 | 0.85958 | 384.7 | 408.3 | 23.6 |
| 60 | 1.28936 | 368.3 | 424.2 | 55.9 |
| 80 | 1.71915 | 400.2 | 494.3 | 94.1 |
| 100 | 2.14894 | 401.3 | 529.2 | 127.9 |

As can be understood from the detection results shown in TABLE 4 and FIG. 19, when the mixture is made using zeolite and potassium carbonate so that the mole of potassium (K) in potassium carbonate per 1 mol. of Si element in zeolite is within a range of 0.1 mol. to 2.0 mol, that is, when the mixture of zeolite and potassium carbonate is mixed to provide the relationship of potassium carbonate within a range of 5 pts.wt.. to 80 pts.wt.. per zeolite of 100 pts.wt., the obtained catalyst has a low DTA peak temperature, in other words, has a superior PM combustion promoting function.

On the other hand, when not providing the condition to have the range of 0.1 mol. to 2.0 mol. of potassium (K) in potassium carbonate per 1 mol. of Si element in zeolite, the obtained catalysts, in particular, the catalyst treated by water washing has a high DTA peak temperature with a low water proof capability (or a low water resistance).

It is more preferable to have the range of 0.2 mol. to 1.5 mol. of potassium (K) in potassium carbonate per 1 mol. of Si element in zeolite. It may be said from the detection results shown in TABLE 4 and FIG. 19, this condition can produce the particulate combustion catalyst with a superior water proof capability (or a high water resistance).

As described above, the sixth embodiment of the present invention can make and provide the particulate combustion catalyst capable of stably burning and removing PM, contained in an exhaust gas emitted from an internal combustion engine, for a long period of time with a superior water when the mixture is prepared so that the amount of potassium (K) in potassium carbonate per 1 mol. of Si element in zeolite has the range within 0.1 mol. to 2.0 mol.

It is possible to apply the particulate combustion catalyst according to the sixth embodiment to a particulate sensor for use to detect an amount of particulate matter contained in an exhaust gas emitted from an internal combustion engine.

### Seventh embodiment

A description will be given of the production of the particulate combustion catalyst and the evaluation of function of the catalyst according to the seventh embodiment of the present invention. That is, the seventh embodiment detected the influence of the kind of alkali metal element or alkali earth metal element added into zeolite to make a mixture to the PM combustion promoting function.

That is, the seventh embodiment prepared a plurality of catalysts. Each of the catalysts was made of a mixture composed of zeolite and a different alkali metal element or a different earth alkali metal. The seventh embodiment detected the PM combustion promoting function of the above catalysts.

The catalysts according to the seventh embodiment were made by the same method of the third embodiment except for using different alkali metal elements and alkali earth metal elements.

Specifically, like the method of the third embodiment, zeolite of LTA type having a mole ratio of SiO₂/Al₂O₃ of 2.0 (product name "A-3" manufactured by TOSOH Corporation in Japan) was prepared.

Next, the seventh embodiment prepared a plurality of mixtures, each mixture is composed of zeolite and each of alkali metal element source (sodium carbonate, potassium carbonate, rubidium carbonate, and cesium carbonate) and alkali earth metal element source (magnesium hydroxide, calcium carbonate, strontium carbonate, and barium carbonate).

Each of the mixtures was made so that alkali metal element or alkali earth metal element in alkali metal element source or alkali earth metal element source in each mixture has 0.225 mol. per 1 mol. of Si element in zeolite. The mixing for each mixture was performed in water and the mixture was then dried, like the production method of the sample E3 in the third embodiment, previously described.

Next, the mixtures were heated at the heating rate of 100°C/hour up to 1000°C and then held at 1000°C for ten hours in order to fire the mixtures as bulks.

Next, each of the fired bulks was pulverized to make the catalyst powder having a median particle diameter (or a median grain diameter) of not more than 10 µm and a maximum particle size of not more than 100 µm. The above processes prepared the eight types of the particulate combustion catalysts of different alkali metal elements (Na, K, Rb, and Cs) or different alkali earth metal elements (Mg, Ca, Sr, and Ba)..

Like the method of detecting the sample E3 according to the third embodiment, the seventh embodiment detected the PM combustion promoting function of each of the eight types of the catalysts, in which one group was treated by water washing and the other group was treated by water washing. The PM combustion promoting function was obtained by detecting the DTA peak temperature of each of the catalysts.

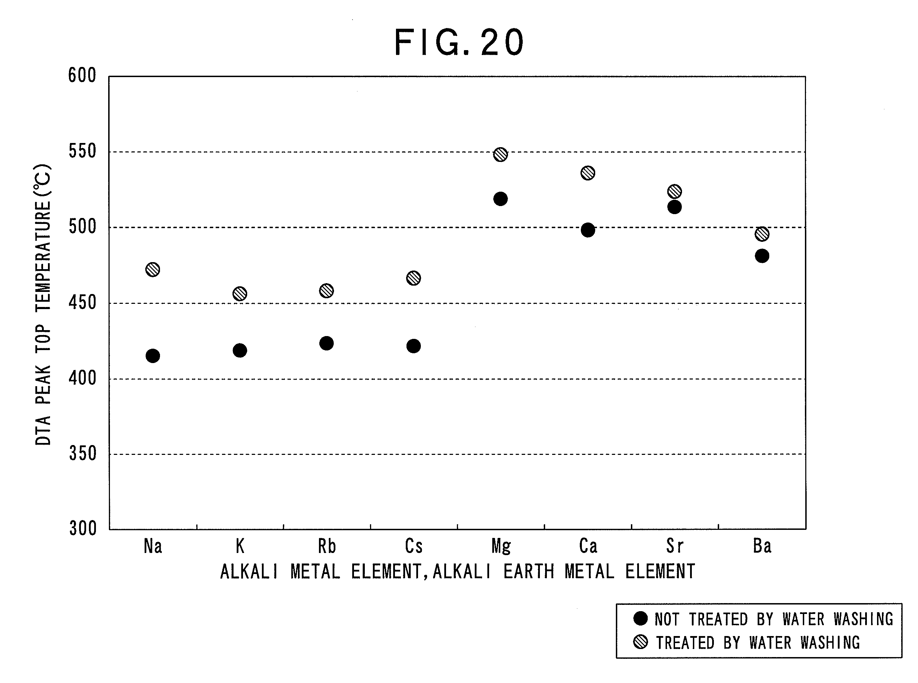

FIG. 20 shows the detection results of the DTA peak top temperature of each of the eight catalysts according to the seventh embodiment. In FIG. 20, the horizontal axis indicates alkali metal elements in alkali metal element source and alkali earth metal elements in alkali earth metal element sources which were added into zerlite to make the mixtures. The vertical axis indicates the DTA peak top temperature.

As can be understood from the detection results shown in FIG. 20, each of the catalysts containing the alkali metal elements and alkali earth metal elements, regardless of the water washing treatment, has a low DTA peak temperature which is approximately equal to or lower than the DTA peak temperature of noble metal catalyst (Pt).

In particular, when the catalyst containing alkali metal element source and barium as alkali earth metal element source, which was treated by water washing, has a low DTA peak temperature which is lower than 500 °C. That is, it may be said that this catalysts has a superior PM combustion promoting function.

As described above in detail, according to the seventh embodiment of the present invention, it can be understood to make the catalyst having a superior PM combustion promoting function. That is, it is possible to make or provide the particulate combustion catalyst capable of stably burning and removing PM contained in an exhaust gas for a long period of time at a low temperature in the presence of water or moisture condition even if the catalyst consists of zeolite and each of alkali metal element and alkali earth metal elements.

It is possible to apply the particulate combustion catalyst according to the seventh embodiment to a particulate sensor for use to detect an amount of particulate matter contained in an exhaust gas emitted from an internal combustion engine.

### Eighth embodiment

A description will be given of the production of the particulate sensor element using the particulate combustion catalyst according to the eighth embodiment of the present invention.

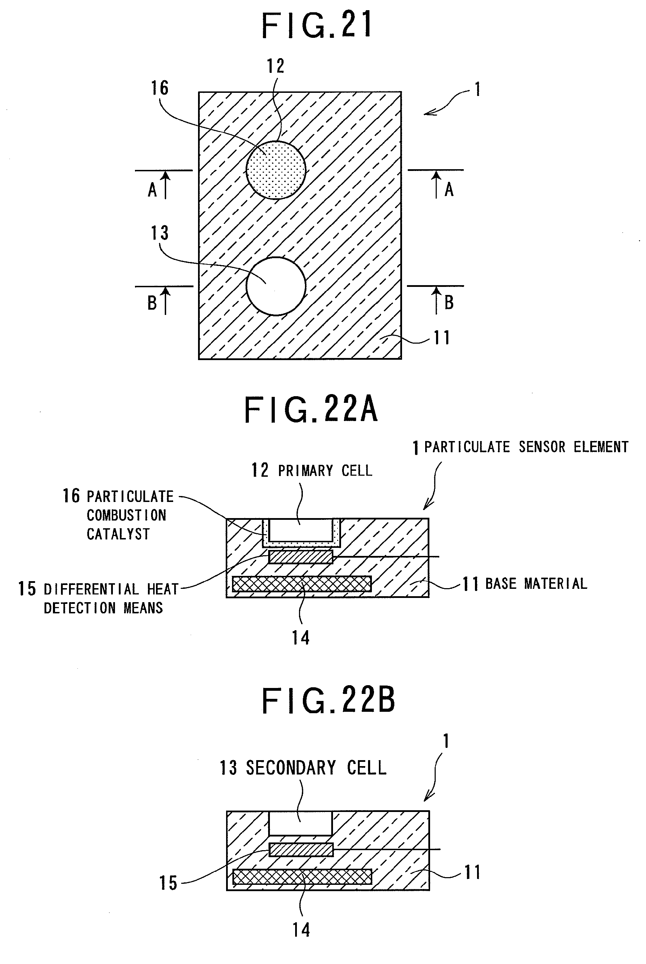

As shown in FIG. 21 to FIG. 22A and FIG. 22B, the particulate sensor element 1 according to the eighth embodiment is composed of a base material 11 made of ceramics, a primary cell 12 and a secondary cell 13, a heater 14, and a differential thermal detection means 15. The primary cell 12 and the secondary cell 13 are capable of capturing particulate matter (PM) contained in an exhaust gas. The heater 14 is capable of heating the primary cell 12 and the secondary cell 13 in order to burn the particulate matter captured in the primary cell 12 and the secondary cells 13. The differential thermal detection means 15 detects a differential heat of combustion when particulate matter captured in the primary cell 12 and the secondary cell 13 is burned.

The primary cell 12 supports the particulate combustion catalyst 16 therein. The particulate combustion catalyst 16 is made by firing a mixture or sodalite at a temperature of more than 600°C. The mixture is made by mixing zeolite and alkali metal element source (group) and/or alkali earth metal element source (group). The particulate combustion catalyst 16 can be made according to the first to seventh embodiments of the present invention. On the other hand, the secondary cell 13 does not support any catalyst therein.

A description will now be given of the particulate sensor element 1 according to the eighth embodiment in detail.

The particulate sensor element 1 can be used for detecting an amount of particulate matter (PM) contained in an exhaust gas emitted from an internal combustion engine.

As shown in FIG. 21, FIG. 22A and FIG. 22B, the base material 11 is made of alumina. The primary cell 12 and the secondary cell 13 are formed on the base material 11 and have a cylindrical concave shape.

The primary cell 12 supports the particulate combustion catalyst 16 therein. The particulate combustion catalyst 16 is composed of the sample E1 produced in the first embodiment previously described, that is, produced by firing a mixture of sodalite and potassium carbonate. On the other hand, the secondary cell 13 does not support any catalyst.

The heater 14 is composed of a ceramic heater. The ceramic heater is composed of a heating part and a lead part. The heating part generates heat when electric power is supplied to the heating part through the lead part from an external electric power source (not shown). In the eighth embodiment, both the heating part and the lead part are made of platinum (Pt) and rhodium (Rh). The differential thermal detection means 15 is made of a thermoelectric couple of a Pt-Rh thin film.

Next, a description will now be given of a production method of the particulate sensor element 1 according to the eighth embodiment.

Firstly, alumina powder having a predetermined particle size, organic solvent such as alcohol, binder such as polyvinyl butyral (PVB), plasticizer, and other necessary raw materials were mixed using a hot mill in order to make an alumina dispersion solution in slurry.

Next, the alumina solution was shaped in a sheet shape by a doctor blade method to produce a necessary number of alumina green sheets. By the way, it is possible to make the green sheets by an extrusion molding method or another known method.

Next, two circular holes for making the primary cell 12 and the secondary cell 13 were formed on each of a part of the alumina green sheets. Those alumina green sheets having the holes for making the primary cell 12 and the secondary cell 13 were referred to as the "green sheets for making cells".

A part of the alumina green sheets was processed by screen printing in order to make the heating part and the lead part made of a Pt-Rh thin film. Those alumina green sheets were referred to as the "green sheets for making heater".

Further, the remaining alumina green sheets were processed by screen printing in order to make the thermoelectric couple of Pt-Rh thin film. Those alumina green sheets were referred to as the "green sheets for making thermoelectric couple.

The green sheets for making cells, the green sheets for making heater, and the green sheets for making thermoelectric couple were laminated together in order to produce a laminate. By the way, other green sheets in which no hole and no printed part were formed were laminated between those green sheets according to demand. The two holes formed in the green sheet for cell and the surface of the other green sheet made two concave parts in the laminate. Those concave parts became the primary cell 12 and the secondary cell 13 by firing the laminate (see FIG. 21, FIG. 22A and FIG. 22B).

It is possible to change the depth of each of the primary cell 12 and the secondary cell 13 in the lamination direction of the laminate according to the number of the green sheets for making cells. The laminate was fired at the temperature of 1450°C for approximately 100 minutes in air (or under an air atmosphere) in order to make the base material 11 made of alumina.

Next, one of the concave parts in the base material 11 was coated with the particulate combustion catalyst 16 (sample E1) produced by the first embodiment. Specifically, the sample E1 was dispersed in water solution, and one of the concave parts was coated with the dispersion solution of the sample E1. The base material 11 was then dried.

After the drying step, the base material 11 was fired at the temperature of 600°C for approximately 60 minutes under atmosphere to produce the particulate sensor element 1 having the primary cell 12 and the secondary cell 13 in which the particulate combustion catalyst 16 was supported in the primary cell 12. In the eighth embodiment, the amount of the particulate combustion catalyst 16 supported in the primary cell 12 was 5.5 mg.

The eighth embodiment uses the sample E1 according to the first embodiment as the particulate combustion catalyst 16, and produces the particulate sensor element 1 having the primary cell 12 and the secondary cell 13 in which the particulate combustion catalyst 16 was supported in the primary cell 12. It is also possible to produce the particulate sensor element having the same effects describe above using the other types of the particulate combustion catalysts according to the second to seventh embodiments, previously described.

Next, a description will now be given of the combustion test for evaluating the characteristics of the particulate sensor element produced by the eighth embodiment.

### [Combustion test]

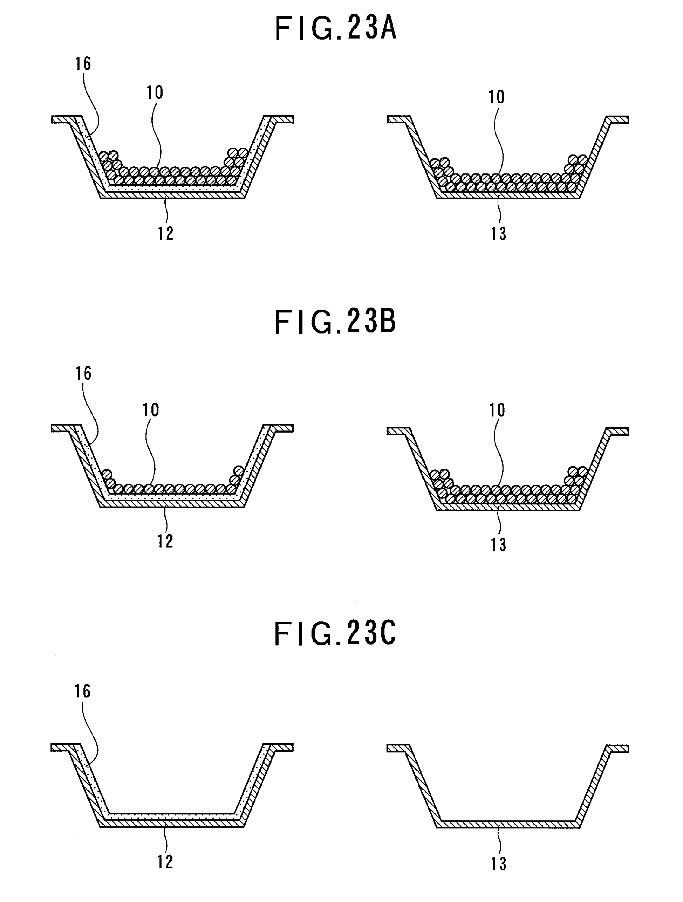

At first, carbon black (CB) powder 10 was prepared as substitute for particulate matter (PM). The CB powder 10 of 0.6 mg was placed in the primary cell 12 and the secondary cell 13, respectively (see FIG. 23A).

Next, the particulate sensor element was placed in a measuring container under atmosphere containing oxygen (O₂) of 10 vol.% (flow rate of 50 ml/minutes). Electric power was supplied to the heater 15 in the particulate sensor element 1 to heat the CB powder 10 in each of the primary cell 12 and the secondary cell 13 (see FIG. 21, FIG. 22A, and FIG. 22B).

The heating rate was 50°C/minute. The heater 15 was heated up to 900°C from room temperature.

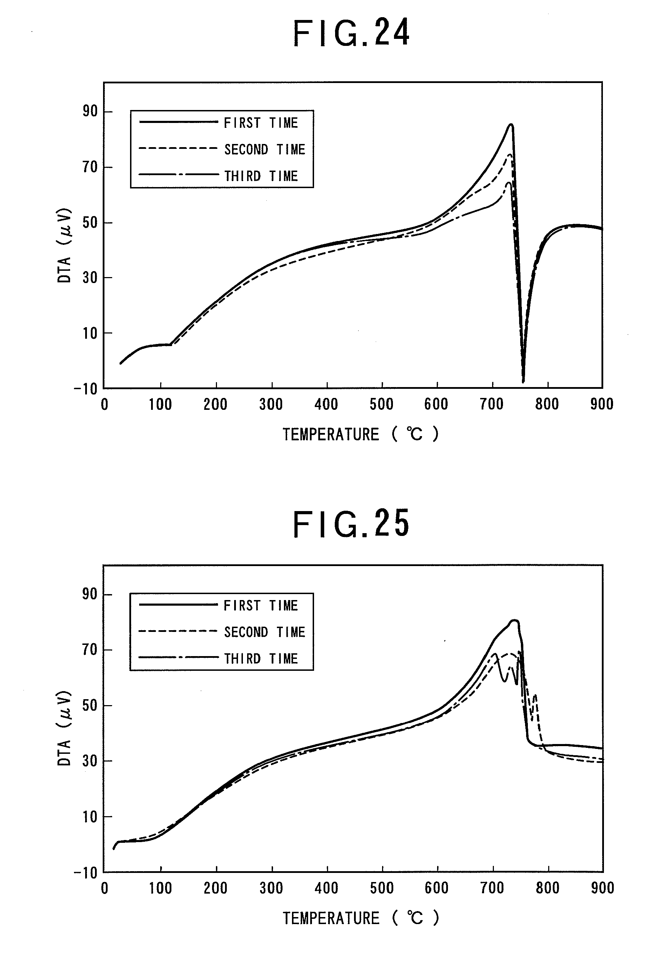

A control device (not shown) is connected to the differential thermal detection means 15 (made of the thermoelectric couple of a Pt-Rh thin film) in the particulate sensor element 1 detecting the temperature of each of the primary cell 12 and the secondary cell 13, and calculates the temperature difference between them. The above test was performed three times. FIG. 24 shows the detection results of the above combustion test.

In FIG. 24 and FIG. 25, the horizontal axis indicates the temperature (°C), and the vertical axis designates the differential heat of combustion (DTA(µA)).

A comparison sample of the particulate sensor element was prepared, in which Pt catalyst was supported instead of particulate combustion catalyst (sample E1). The combustion test was performed three times for the comparison sample by the above same method. FIG. 25 shows the detection results of the comparison sample. The particulate sensor element as the comparison sample in which Pt catalyst was supported was produced by the same manner excepting the use of Pt catalyst instead of the particulate combustion catalyst.

In the heating for the particulate sensor element in which the particulate combustion catalyst was supported in the primary cell 12, because the CB power 10 placed in the primary cell 12 was preferentially burned, rather than the CB powder 10 placed in the secondary cell 13, by the presence of the particulate combustion catalyst 16 (see FIG. 23B), the temperature peak appeared (the heat peak of the CB powder placed in the primary cell 12 against the CB powder placed in the secondary cell 13) as shown in FIG. 24. Then, because the CB powder 10 placed in the secondary cell 13 reached its spontaneous combustion temperature (see FIG. 23C), the endothermic temperature peak appeared (the heat peak of the CB powder placed in the secondary cell 13 against the CB powder placed in the primary cell 12). Thus, as shown in FIG. 24, it is possible to precisely detect the quantitative amount of the CB powder because the apparent heat peaks appear at the heat side and absorb side.

On the other hand, in the particulate sensor element as the comparison sample in which the Pt catalyst was supported in the primary cell, the combustion of CB powder placed in the primary cell was preferentially initiated at a low temperature rather than the spontaneous combustion temperature of CB powder by the presence of the Pt catalyst placed in the primary cell, the function of the Pt catalyst capable of burning CB powder is lower than that of the particulate combustion catalyst 16 (see FIG. 25), according to reaching the spontaneous combustion temperature of CB powder, the peak having a combination of the absorption peak and the heating peak appeared. The detection results shown in FIG. 25 has no rapidly absorption peak like the rapid absorption peak shown in FIG. 24. Therefore, it is impossible for the comparison sample to precisely detect the amount of CB powder when the Pt catalyst is used as the combustion catalyst.

As described above, according to the eighth embodiment, it can be understood from the detection results shown in FIG. 21 to FIG. 25 that the use of the particulate sensor element 1 having the primary cell 12 and the secondary cell 13 in which the particulate combustion catalyst 16 is supported in the primary cell 12 can precisely detect the amount of particulate matter contained in an exhaust gas emitted from an internal combustion engine.

### Ninth embodiment

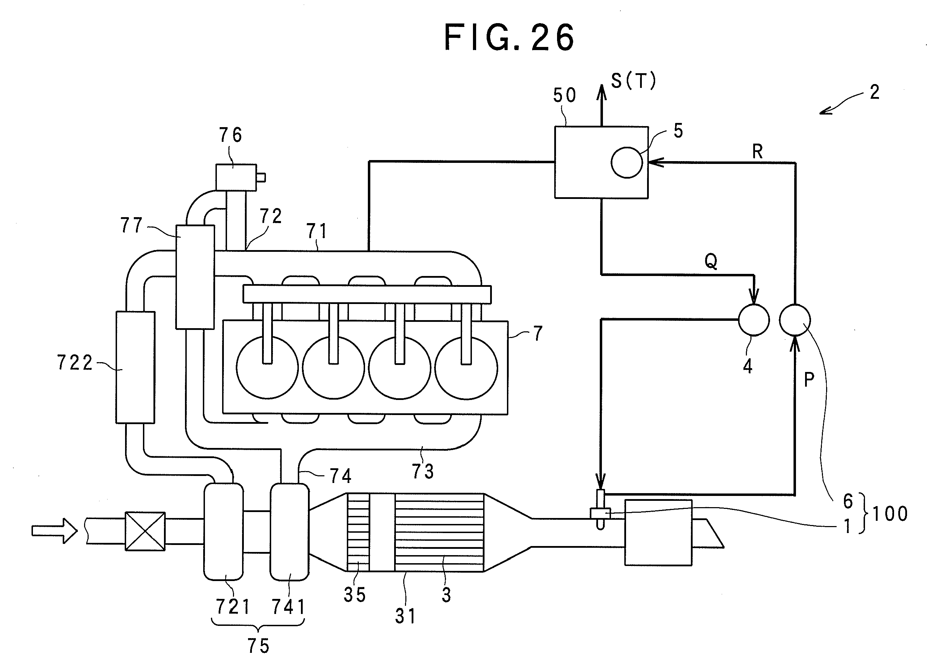

A description will be given of a fault detection apparatus 2 equipped with the particulate sensor 100 equipped with the particulate sensor element 1 according to the ninth embodiment of the present invention with reference to FIG. 26.

FIG. 26 is a schematic explanatory view of an engine control system into which the fault detection apparatus 2 according to the ninth embodiment of the present invention is assembled.

As shown in FIG. 26, the fault detection apparatus 2 according to the ninth embodiment is comprised of an exhaust gas purifying filter 3, the particulate sensor 100, a sensor control means 4, and a fault detection means 5. The exhaust gas purifying filter 3 purifies an exhaust gas emitted from an internal combustion engine 7 such as a diesel engine. That is, the exhaust gas purifying filter 3 removes particulate matter (PM) contained in the exhaust gas emitted from the internal combustion engine 7. The particulate sensor 100 detects an amount of PM contained in the exhaust gas after passed through the exhaust gas purifying filter 3. The sensor control means 4 controls the operation of the particulate sensor 100. The fault detection means 5 detects the occurrence of fault of the exhaust gas purifying filter 3 based on the amount of PM detected by the particulate sensor 100.

The particulate sensor 100 is comprised of the particulate sensor element 1 (see FIG. 21, FIG. 22A and FIG. 22B) and a calculation means 6. In the particulate sensor element 1, the particulate combustion catalyst 16 is supported in the primary cell 12 produced in the eighth embodiment. The calculation means 6 calculates the amount of PM based on a differential heat of combustion detected by the particulate sensor element 1.

As shown in FIG. 26, an intake pipe 72 is connected to the intake port of the internal combustion engine 7 through an intake manifold 71, and an exhaust gas pipe 74 is connected to the exhaust port of the internal combustion engine 7 through an exhaust manifold 73. Those components form the exhaust passage of the exhaust gas.

An intercooler 722 and a compressor 721 for a turbo super charger 75 are mounted to the intake pipe 72. The intercooler 722 cools an intake air which is compressed by the turbo super charger 75.

A turbine 741 for the turbo super charger 75 is mounted to the exhaust pipe 74. In the turbo super charger 75, rotary vanes (not shown) of the compressor 721 are connected to rotary vanes (not shown) of the turbine 741 through a shaft (not shown). The energy of the exhaust gas emitted from the internal combustion engine 7 rotates the turbine 741. The rotational energy of the turbine 741 rotates the compressor 721 through the shaft. The rotary energy of the compressor 721 compresses intake air in the intake pipe 72.

An oxidation catalyst 35 made of Pt-alumina catalyst and the exhaust gas purifying filter (or diesel particulate filter: DPF) 3 are mounted to the exhaust gas pipe 74 in order. The oxidation catalyst 35 and the DPF 3 are accommodated in a cylindrical capturing unit 31. The diameter of the cylindrical capturing unit 31 is made by expanding the diameter of the exhaust gas pipe 74.

The DPF 31 is a porous body made of ceramics. The ceramics is made of cordierite, aluminum titanate, SiC, or others. The porous body allows an exhaust gas to pass through it, and on the other hand traps particulate matter as harmful substances such as soot contained in the exhaust gas. The DPF 3 supports noble metals such as Pt, Pd, and Rh through a coating material having a specific surface area such as alumina. The DPF 3 supporting such noble metals has a function to oxidize carbon monoxide (CO) and hydro carbon (HC).

An exhaust gas recirculation (EGR) control valve 76 and an EGR cooler 77 are mounted to the engine 7. Through the EGR control valve 75, the exhaust gas is used as the intake air to the internal combustion engine 7. The EGR cooler 77 is capable of increasing the efficiency of a filling ratio of the exhaust gas to be supplied to the engine 7 as the intake air.

At the downstream side of the DPF 3, the particulate sensor element 1 produced in the eighth embodiment is mounted. The particulate sensor element 1 is inserted and placed in the exhaust gas passage or pipe so that the primary cell 12 and the secondary cell 13 in the particulate sensor element 1 are directly exposed to the exhaust gas (see FIG. 21, FIG. 22A and FIG. 22B). The information regarding the temperature difference detected by the differential thermal detection means 15 (made of the thermoelectric couple) in the particulate sensor element 1 is transmitted as the input signal P to the calculation means 6.

The calculation means 6 calculates the amount of PM contained in the exhaust gas based on the input signal P.

As shown in FIG. 26, an ECU 50 has a built-in memory (not shown) which stores programs therein. The programs stored in the memory perform various control operations such as opening/closing control for the EGR control valve 76, opening/closing control for intake air throttle valve (not shown), and intake-air amount control of intake air by the rotation of the compressor 721 based on the information such as engine rotation speed control, temperature control for an exhaust gas, accelerator opening ratio, variation of acceleration speed.

The ECU 50 stores the program for transmitting a start signal Q to the sensor control means 4 based on drive diagnostic information such as drive distance and idling period of a vehicle. When receiving the start signal Q, the sensor control means 4 instructs the particulate sensor 100 to operate.

The ECU 50 transmits the start signal Q when the condition is established, for example, when an elapsed period of time counted when the vehicle reaches a predetermined drive distance excesses ten seconds, for example. Based on the start signal Q, electric power is supplied to the heater part 14 in the particulate sensor element 1 to heat the heating part (see FIG. 22A and FIG. 22B).

In addition, as shown in FIG. 26, the differential thermal detection means 15 (made of the thermoelectric couple) built in the particulate sensor element 1 transmits the output signal P indicating the temperature information and heating amount to the calculation means 6. When receiving the output signal P, the program stored in the calculation means 6 calculates the amount of PM.

The calculation means 6 transmits the output signal R as the calculated result regarding the calculated amount of PM to the ECU 50. When receiving the output signal R, the program stored in the ECU 50 calculates the amount of PM per drive distance. In the ninth embodiment, the calculation means 6 is separated from the ECU 50 (see FIG. 26). However, it is possible to assemble the calculation means 6 into the ECU 50.

Still further, the fault detection means 5 is assembled into the ECU 50. Specifically, the ECU stores an program that acts as the fault detection means 5 capable of lighting a warning lamp and outputting an output signal S informing the deterioration of the exhaust gas purifying filter, for example, when the amount of PM at the downstream side of the DPF per drive distance is not less than a predetermined value X. Thus, it is possible to inform an abnormal state of the DPF 3 to the vehicle driver.

As described above, the engine control system is equipped with the fault detection apparatus 2 having the particulate sensor element 1 according to the eighth embodiment. It is thereby possible to precisely detect the amount of PM contained in an exhaust gas and to precisely detect the deterioration of the exhaust gas purifying filter.

While specific embodiments of the present invention have been described in detail, it will be appreciated by those skilled in the art that various modifications and alternatives to those details could be developed in light of the overall teachings of the disclosure. Accordingly, the particular arrangements disclosed are meant to be illustrative only and not limited to the scope of the present invention which is to be given the full breadth of the following claims and all equivalents thereof.

A particulate sensor element 1 for detecting PM amount in an exhaust gas has a base material 11 made of ceramics, primary and secondary cells 12, 13, a heater 14, a differential thermal detection means 15 which are formed in the base material 11. The cells 12, 13 capture PM contained in the exhaust gas. The heater 14 generates heat to burn PM captured in the cells 12, 13. A differential heat of combustion when the captured PM is burned is obtained from a detection result of the detection means 15. The primary cell 12 supports a PM combustion catalyst 16 consists of a mixture of zeolite and alkali metal element and/or alkali earth metal element, or consists of sodalite, which are fired at a temperature of not less than 600°C. The secondary cell 13 supports no PM combustion catalyst. A fault detection apparatus has the particulate sensor element 1.

## Claims

1. A particulate sensor element (1) for use to detect an amount of particulate matter contained in an exhaust gas emitted from an internal combustion engine (7), comprising:
a base material (11) made of ceramics;
a primary cell (12) and a secondary cell (13) formed in the base material (11) and capturing particulate matter contained in an exhaust gas;
a heater (14) that generates heat to burn the particulate matter captured in the primary cell (12) and the secondary cell (13); and
a differential thermal detection means (15) that detects a differential heat of combustion when the particulate matter captured in the primary cell (12) and the secondary cell (13) is burned,
wherein the primary cell (12) supports therein a particulate combustion catalyst (16) consists of a mixture of zeolite and alkali metal element source and/or alkali earth metal element source, or consists of a sodalite, which are fired at a temperature of not less than 600°C, and the secondary cell (13) supports no particulate combustion catalyst.

2. The particulate sensor element (1) as claimed in claim 1, wherein the zeolite has a chemical composition to provide less than 200 mol of an amount of SiO₂ of per 1 mol of Al₂O₃.

3. The particulate sensor element (1) as claimed in claim 1 or 2, wherein the sodalite is used as zeolite in the mixture.

4. The particulate sensor element (1) as claimed in claim 3, wherein the mixture has a chemical composition to provide not more than 2.25 mol, preferably not more than 1 mol, of a total amount of alkali metal element source and/or alkali earth metal element in alkali earth metal element source per 1 mol of Si element in the sodalite.

5. The particulate sensor element (1) as claimed in claim 1 or 2, wherein zeolite other than sodalite is used in the mixture, and the mixture has a chemical composition to provide not less than 0.1 mol to not more than 2.0 mol of a total amount of alkali metal element in alkali metal element source and/or alkali earth metal element in alkali earth metal element source within a range per 1 mol of Si element in the zeolite.

6. The particulate sensor element (1) as claimed in any one of claims 1 to 5, wherein the mixture contains at least alkali metal element source.

7. The particulate sensor element (1) as claimed in any one of claims 1 to 6, wherein the alkali metal element source is at least one selected from Na, K, Rb, and Cs, and the alkali earth metal element source is at least one selected from Mg, Ca, Sr, and Ba, wherein the alkali earth metal element source preferably contains at least Ba.

8. The particulate sensor element (1) as claimed in any one of claims 1 to 7, wherein the alkali metal element source and/or alkali earth metal element source are carbonate, sulfate, phosphate, nitrate, organic acid, halide, oxide, or hydroxide, and/or wherein the mixture of zeolite and alkali metal element source and/or alkali earth metal element source are mixed in hydrophilic solvent and then dried to evaporate water component in the solvent in order to make bulk of the mixture.

9. The particulate sensor element (1) as claimed in any one of claims 1 to 8, wherein the particulate combustion catalyst (16) is supported in the filter base (2) after the mixture or the sodalite is fired at the temperature of not less than 600°C.

10. The particulate sensor element (1) as claimed in claim 9, wherein the particulate combustion catalyst (16) is supported in the filter base (2) after the mixture or the sodalite is pulverized after the mixture or the sodalite is fired at the temperature of not less than 600°C and preferably of not more than 1200°C.

11. The particulate sensor element (1) as claimed in any one of claims 1 to 8, wherein the particulate combustion catalyst (16) is supported in the filter base (2) after the mixture or the sodalite is fired at the temperature of not less than 600°C after the mixture of the sodalite is supported in the filter base (2).

12. The particulate sensor element (1) as claimed in any one of claims 1 to 11, wherein the particulate combustion catalyst (16) is made by firing the mixture or the sodalite at a temperature of not less than 700°C.

13. A fault detection apparatus (2) capable of detecting a fault of an exhaust gas purifying filter (3), comprising:
an exhaust gas purifying filter (3) that removes particulate matter contained in an exhaust gas emitted from an internal combustion engine (7) in order to purify the exhaust gas;
a particulate sensor (100) comprised of the particulate sensor element (1) as claimed in any one of claims 1 to 10 and a calculation means (6), and the particulate sensor element (1) detecting the particulate matter contained in the exhaust gas passed through the exhaust gas purifying filter (3) and the calculation means (6) calculating an amount of the particulate matter based on a differential heat of combustion obtained from the particulate sensor element (1);
a sensor control means (4) that controls the operation of the particulate sensor (1); and
a fault judgment means (5) that detects a fault of the exhaust gas purifying filter (3) based on the amount of particulate matter detected by the particulate sensor (1).

14. The fault detection apparatus (2) as claimed in claim 13, further comprising a drive diagnostic means (50) that performs a drive diagnosis of the vehicle, wherein the sensor control means (4) controls the operation of the particulate sensor (100) based on drive diagnosis information as the result of the drive diagnosis of the vehicle by the drive diagnostic means (50).

15. The fault detection apparatus (2) as claimed in claim 14, wherein the drive diagnostic means (50) detects a drive distance as the drive diagnosis, and the fault judgment means (5) detects the occurrence of fault of the exhaust gas purifying filter (3) based on a change of the amount of the particulate matter per drive distance.
